# EUROPEAN PATENT APPLICATION

(11) **EP 4 741 966 A2**
(43) Date of publication of application: **13.05.2026**
(21) Application number: 26161152.9
(22) Date of filing: 10.12.2021
(51) Int. Cl.: G05B 19/418

(54) **CHEMICAL PRODUCTION**

(30) Priority: 14.12.2020 EP 20213833
(62) Divisional of application: 21835712.7
(71) Applicant: BASF SE, 67056 Ludwigshafen am Rhein (DE)
(72) Inventor: WINKLER, Christian-Andreas, 67056 Ludwigshafen am Rhein (DE); RUDOLPH, Hans, 49448 Lemfoerde (DE); HARTMANN, Michael, 49448 Lemfoerde (DE); RAUTENSTRAUCH, Markus, 49448 Lemfoerde (DE); HUANG, Yuan En, 50544 Lukang (TW); WANDERNOTH, Sebastian, 67056 Ludwigshafen am Rhein (DE); YAKUT, Nataliya, 67061 Ludwigshafen am Rhein (DE)
(74) Representative: BASF IP Association

(57) **Abstract**

The present teachings relate to a method for improving a production process for manufacturing a chemical product using at least one input material at an industrial plant, the industrial plant comprising a plurality of physically separated equipment zones, the method comprising: providing, via an interface, an upstream object identifier comprising input material data; receiving, at a computing unit, real-time process data from one or more of the equipment zones; determining, via the computing unit, a subset of the real-time process data based on the upstream object identifier and a zone presence signal; computing, via the computing unit, at least one zone-specific performance parameter of the chemical product related to the upstream object identifier based on the subset of the real-time process data and historical data; determining, in response to at least one of the performance parameters, a target equipment zone where the input material and/or chemical product is to be sent. The present teachings also relate to a system, and a software program.

## Description

### TECHNICAL FIELD

The present teachings relate generally to computer assisted chemical production.

### BACKGROUND ART

In industrial plants, input material is processed to manufacture one or more products. Properties of the manufactured product thus have a dependence upon manufacturing parameters. It is usually desired to correlate manufacturing parameters to at least some properties of the product for ensuring product quality or production stability.

Within process industry, or industrial plants such as chemical or biological production plants, one or more input materials are processed using a production process for producing one or more chemical or biological products. Production environment in the process industry can be complex, accordingly the properties of the product may vary according to variations in the production parameters that influence said properties. Usually the dependency of the properties on production parameters can be complex and intertwined with a further dependence on one or more combinations of different parameters. In some cases, the production process may be divided into multiple stages, which can further aggravate the problem. It may thus be challenging to produce a chemical or biological product with consistent and/or predictable quality.

For keeping quality of the chemical product consistent, quality control may be performed. Quality control normally involves collecting one or more samples of the chemical product after or during the production process. The samples are then analyzed and then corrective action, as necessary, may be taken. To be effective, the samples may need to be collected regularly and should be representative of the statistical variation of the chemical product. Dependent upon the frequency of variations occurring in the production process, the frequency of quality control may be required to be aligned. Quality control can thus be expensive and time consuming. Production processes with narrower variations can require expensive equipment and/or input material.

Further, in contrast to discrete processing, chemical or biological processing such as continuous, campaign or batch processes, may provide vast amounts of time series data. However, machine learning via traditional time series approaches has proven to be less practical, since it can be difficult to integrate data according to the needs of horizontal integration across the value chain. In particular, easy and meaningful data exchange or standardization can pose major problems.

There is hence a need for approaches that can improve quality and production stability across the value chain ideally from barrel to end product.

### SUMMARY

At least some of the problems inherent to the prior art will be shown solved by the subject matter of the accompanying independent claims. At least some of the further advantageous alternatives will be outlined in the dependent claims.

When viewed from a first perspective, there can be provided a method for improving a production process for manufacturing a chemical product at an industrial plant, the industrial plant comprising a plurality of physically separated equipment zones and one or more computing units, and the product being manufactured by processing, via the plurality equipment zones, at least one input material using the production process, which method comprises:
- providing, via an interface, an upstream object identifier comprising input material data;
   wherein the input material data is indicative of one or more properties of the input material,
- receiving, at any of the computing units, real-time process data from one or more of the equipment zones; wherein the real-time process data comprises real-time process parameters and/or equipment operating conditions,
- determining, via any of the computing units, a subset of the real-time process data based on the upstream object identifier and a zone presence signal; wherein the zone presence signal indicates presence of the input material at a specific equipment zone during the production process,
- computing, via any of the computing units, at least one zone-specific performance parameter of the chemical product related to the upstream object identifier based on the subset of the real-time process data and historical data;
- determining, in response to at least one of the performance parameters, a target equipment zone where the input material and/or chemical product is to be sent.

Hence, the input material and/or chemical product can be diverted or destined to the target equipment zone. The target equipment zone may be one of a plurality of target equipment zones. The determination may be made by any one or more of the computing units. The computing unit may even be configured to divert the material and/or the product to the target zone, for example by controlling one or more actuators. The method steps may be performed by the same computing unit or different computing units operatively coupled to each other, for example, if one of the units receives the process data, the other can make the determination of the subset. In such a case, the operative coupling may for example be via one or more memory locations or memory storage shared by the computing units. Additionally, or alternatively, the computing units may be operatively coupled via one or more data buses or signals. It will be appreciated that in cases where there is "a" computing unit instead of one or more computing units, the method steps can be performed by the computing unit.

The applicant has realized that by doing so, the at least one zone-specific performance parameter indicative of the quality of the chemical product may not only be determined essentially while the input material is being processed, e.g., in an upstream equipment zone, but it may also be determined, based upon at least one of the performance parameters, to which target equipment zone the input material or processed input material and/or the chemical product should proceed to. Thus, a quality measure of the chemical product can be evaluated on-the-fly via the at least one zone-specific performance parameter and one or more of the computed performance parameters can be used to determine the flow and/or direction of the input material and/or the chemical product not only in the production process, but also potentially beyond.

There can be several benefits associated with the present approach. For example, the chemical product meeting with certain predefined performance parameters can be diverted towards, or sent to, the target equipment zone or target zone. It will be appreciated that there may be a plurality of target equipment zones such that each target zone is associated with a predefined quality criterion specified via value or range of one or more of the performance parameters. Thus, already during production, the produced chemical products can be arranged to be sorted between the plurality of target equipment zones according to quality computed via at least one of the performance parameters.

Normally, practical production processes result in products within a tolerance range, which is a statistical range. The tolerance range may relate to variation in one or more of the properties of the product. The variations may be caused by variations in the properties of the input material and/or variations in the process parameters and/or equipment operating conditions that a specific input material is subjected to during the production process. Accordingly, a plurality of chemical products may have a statistical variation in properties or quality. Hence, some chemical products may be better in terms of quality as compared to the others. Measures that may be undertaken to reduce the tolerance range can be to control the process parameters and/or equipment operating conditions more tightly and/or select an input material with more consistent properties. Such measures can however be expensive, for example, more expensive equipment may be required and/or more expensive input material may be required for reducing the tolerance range of the chemical product.

It will be appreciated that the present teachings can make it possible to reduce the tolerance range between a sorted plurality of chemical products without requiring a more consistent input material and/or equipment with tight tolerances, both of which can be expensive. The sorted chemical products, i.e., the plurality of chemical products at the target zone can hence have a more consistent quality. Similarly, if there are a plurality of target zones, then the respective plurality of chemical products at each of the target zones can have more consistent properties or quality.

Hence, it will also be appreciated that pursuant to the present teachings essentially the same equipment and/or input material can be used to produce one or more pluralities of chemical products having a tighter tolerance range and more consistent quality. This can also be beneficial if the chemical product is a precursor material to be processed, for example, at a downstream industrial plant. The downstream industrial plant can thus be provided with a more consistent quality chemical product, for example as per the requirements of the downstream industrial plant. Different downstream plants may have different requirements for the properties of the chemical product that they want to use, so the sorted chemical products can be provided to different downstream plants as per requirement whilst ensuring a consistent quality at each of the target zones. Costs of such products can be lower as compared to the chemical products produced with more expensive input material and/or equipment.

It is not essential though that each target zone only is provided with the material and/or product with one or more pre-defined performance parameters. The present teachings can also allow sorting at the same zone as well. For example, the products with different quality may be packaged differently and provided to the same zone. Thus, it is also possible to provide different products or sub-products within the same target zone. For example, a first amount of products having a performance parameter "A" and a second amount of products having a performance parameter "B". There may even be more components.

The upstream object identifier may for example be provided when the input material is at the upstream equipment zone. The subset of the real-time process data for the upstream equipment zone may be determined in response to the zone presence signal indicating the input material being at the upstream equipment zone.

Historical data may comprise past process data and/or quality control data associating at least one historical zone-specific performance parameter with the process data.

Any of the computing units may for example use an analytical computer model and/or a machine learning ("ML") model for computing the at least one zone-specific performance parameter.

According to an aspect, the method also comprises:
- appending, to the upstream object identifier, the at least one zone-specific performance parameter.

The at least one zone-specific performance parameter may be appended, for example, as metadata to the upstream object identifier. The quality measure evaluated via the at least one zone-specific performance parameter is thus appended or encapsulated together with the input material data which is used for producing the specific chemical product. Highly relevant data can thus be encapsulated in the upstream object identifier. This can not only allow for a highly targeted quality control, but also associate the valuable quality measure together with the data that has a bearing in said quality measure. It can allow validating and controlling the on-the-fly monitoring. Moreover, the data appended to the object identifier becomes highly relevant for machine learning approaches, some of which will be discussed in the present disclosure.

According to an aspect, the historical data comprise data from one or more historical upstream object identifiers related to previously processed input material, for example, in the upstream equipment zone.

In some cases, the historical object identifiers may be from other zones with similar production where past input material was processed, so such historical object identifiers from such zones may also be usable.

Thus, data from previous historical object identifiers, such as the historical upstream object identifiers, can be leveraged for computing at least one zone-specific performance parameter. The object identifiers as herein disclosed can allow associating at least specific material properties, via their input material data, with the corresponding historically determined zone-specific performance parameter. The object identifier data can be leveraged for computing the at least one zone-specific performance parameter for the input material being processed.

According to further an aspect, at least of the one historical object identifiers has been appended with at least a part of the process data which is indicative of the process parameters and/or equipment operating conditions that the previously processed input material was processed under, for example, in the upstream equipment zone.

Hence, one or more historical object identifiers may also include their subset of process data that can be leveraged to associate relationship with their performance parameters along with the properties of corresponding past input material.

Hence, when combined as there can be provided a method for improving a production process for manufacturing a chemical product at an industrial plant, the industrial plant comprising a plurality of physically separated equipment zones and one or more computing units, and the product being manufactured by processing, via the plurality equipment zones, at least one input material using the production process, which method comprises:
- providing, via an interface, an upstream object identifier comprising input material data;
   wherein the input material data is indicative of one or more properties of the input material, and the upstream object identifier being provided at an upstream equipment zone,
- receiving, at any of the computing units, real-time process data from one or more of the equipment zones; wherein the real-time process data comprises real-time process parameters and/or equipment operating conditions,
- determining, via any of the computing units, a subset of the real-time process data based on the upstream object identifier and a zone presence signal; wherein the zone presence signal indicates presence of the input material at a specific equipment zone during the production process,
- computing, via any of the computing units, at least one zone-specific performance parameter of the chemical product related to the upstream object identifier based on the subset of the real-time process data and historical data; wherein the historical data comprise data from one or more historical upstream object identifiers related to previously processed input material in the upstream equipment zone, and wherein at least one of the historical upstream object identifiers is appended with at least a part of the process data which is indicative of the process parameters and/or equipment operating conditions that the previously processed input material was processed under, preferably at the upstream equipment zone,
- determining, in response to at least one of the performance parameters, a target equipment zone where the input material and/or chemical product is to be sent.

As was discussed, the method may also comprise:
- appending, to the upstream object identifier, the at least one zone-specific performance parameter.

Thus, at least one, more preferably some, even more preferably most, and more preferably each, historical object identifier has been appended with, or it encapsulates that process data under which the respective previous input material was processed to produce or process the respective chemical product, the historical data as disclosed herein is thus a highly relevant yet concise data set, which can be used for performing computation of one or more performance parameters during production. Thus, it not only can improve the traceability of the chemical product, but also simplify the quality control for the chemical product. More on which will be discussed further in the present disclosure.

According to an aspect, the method also comprises:
- appending, to the upstream object identifier, at least a part of the subset of the real-time process data.

Thus, the relevant process data may be captured together with the input material data also in the upstream object identifier such that any relationship of the chemical product with the properties of the input material may also be captured along with the relevant process data captured as the at least a part of the subset of the real-time process data. This can provide a more complete relationship between the various dependencies those may influence any one or more properties of the chemical product. Another advantage can be that the combination between the various interdependencies that may exist between the input material properties and/or the process parameters are also captured within the object identifier. The appended object identifier is thus enriched with information that can be used not only for tracking the chemical product and/or its specific components such the input material, but also the specific process data that were responsible for resulting in the chemical product. As a result, the object identifiers such as each of the historical object identifiers can be more easily integrated for any machine learning ("ML") and such purposes. Thus, the upstream object identifier can also be used as a historical object identifier for future production.

It will be appreciated that the performance parameter may either be related directly to one or more properties of the chemical product and/or it may be related to a performance parameter of a derivative material or product that is produced during the production process. For example, in cases where the input material is transformed to a derivative material during the course of the production process, it may sometimes be required to track the quality or performance of such a derivative material as well. It will be understood that in such cases where the derivative material is an intermediate material resulting from the input material, said derivative material is then used to produce the chemical product. Since the chemical product is also dependent upon the derivative material, it may sometimes be required to test and track the derivative material. It will further be appreciated that the target equipment zone may even be a zone where the derivative material is to be sent. The term input material is thus used to encompass not only the staring material, but also any derivative or intermediate processed material.

According to an aspect, at least one of the zone-specific performance parameters is related to one or more properties of the derivative material.

According to an aspect, the zone presence signal is be generated via the computing unit by performing a zone-time transformation, which maps at least one property related to the input material to a specific equipment zone. For example, the property related to the input material may be the weight of the input material, such that by a knowledge of the production process, e.g., via the real-time process data, the presence of the input material or its derivative material produced during the production process can be determined. As an example, if an input material with a certain weight in the upstream equipment zone traverses during the production process to a downstream equipment zone, a weight measurement at the downstream zone, e.g., at or within a pre-determined time, can be used to generate a zone presence signal for the downstream zone. Similarly, a flow value, e.g., mass flow or volume flow, by which the input material or its derivative material traverses through the production can be a property is used for generating the zone presence signal. Further as an example, the speed or velocity by which the input material traverses along the equipment zones can be used to determine the space or location where the input material or its corresponding derivative material is at a given time. Alternatively, or in addition, other non-limiting example of the property related to the input material are, volume, fill value, level, color, etc.

The applicant has found it advantageous to generate the zone presence signal by mapping the real-time process data, which in a production environment is time-dependent data, e.g., time-series data, to spatial data thus mapping the real-life production flow using digital flow element representing the input material. For example, digital flow of the input material can be tracked via the upstream object identifier and occurrences in the time-dependent real-time process data can be used for locating the material along the production process. The material is thus tracked or located via the time and real-time process data which is already measured, i.e., by using the time dimension of the process data, which correlates to the time dimension of the flow of the input material along the production chain.

The zone presence signal may be intermittent, for example generated via computing at regular or irregular times, or it may be continuously generated. This can have an advantage that the material associated with the respective object identifier can be continuously or essentially continuously located within the production chain and thus enabling the appending of data which are highly relevant for the material and its transformation to the chemical product. The computation at regular or irregular times may for example be done to check the presence of the material at certain checkpoints within the production chain. This may be supplemented by occurrences in the real-time process data, for example, by one or more sensors as will be outlined below.

Since in chemical production operational parameters relating to the time dimension, like dwell times and flow velocities are known, the zone-time transformation can be a simple mapping in time scales. Alternatively, a more complex model based on process simulations may be used for matching the time scales of material flow and the real-time process data. In any case the time scale of process-data may be finer than the flow of the material so as to attribute the process data parameters more finely to the flow of the material.

Additionally, or alternatively, the zone presence signal may be provided at least partially via a sensor related to a specific zone. For example, a weight sensor and/or image sensor may be used to detect the presence of the input material or the derivative material at a space or in a specific equipment zone.

"Equipment" may refer to any one or more assets within the industrial plant. As non-limiting examples, the equipment may refer to any one or more, or any of their combination of, computing units or controllers such as programmable logic controller ("PLC") or distributed control system ("DCS"), sensors, actuators, end effector units, transport elements such as conveyor systems, heat exchangers such as heaters, furnaces, cooling units, distilling units, extractors, reactors, mixers, millers, choppers, compressors, slicers, extruders, dryers, sprayers, pressure or vacuum chambers, tubes, bins, silos and any other kind of apparatus which is used directly or indirectly for or during production in the industrial plant. Preferably, the equipment refers specifically to those assets, apparatuses or components which are involved directly or indirectly in the production process. More preferably, those assets, apparatuses or components which can influence the performance of the chemical product. An equipment may be buffered, or they may be unbuffered. Moreover, the equipment may involve mixing or no mixing, separation or no separation. Some non-limiting examples of unbuffered equipment without mixing are, conveyor system or belt, extruder, pelletizer, and heat exchanger. Some non-limiting examples of buffered equipment without mixing are, buffer silo, bins, etc. Some non-limiting examples of buffered equipment with mixing are, silo with mixer, mixing vessel, cutting mill, double cone blender, curing tube, etc. Some non-limiting examples of unbuffered equipment with mixing are, static or dynamic mixer, etc. Some non-limiting examples of buffered equipment with separation are, column, separator, extraction, thin film vaporizer, filter, sieve, etc. The equipment may even be, or it may include a storage or packaging element such as, octabin filling, drum, bag, tank truck. Sometimes, a combination of two or more pieces of equipment may also be considered as an equipment.

"Equipment zones" refer to physically separated zones that are either a part of the same piece of equipment, or the zones may be different pieces of equipment that are used for manufacturing the chemical product. The zones are thus physically located at non-identical locations. The locations may be non-identical geographical locations laterally and/or vertically. The input material thus starts from an upstream equipment zone and traverses downstream, towards one or more equipment zones that are downstream of the upstream equipment zone. Various steps of the production process may thus be distributed between the zones.

In present disclosure, the terms "equipment" and "equipment zones" may be used inter changeably.

"Equipment operating conditions" refers to any characteristics or values that represent the state of the equipment, for example, any one or more of, setpoint, controller output, production sequence, calibration status, any equipment related warning, vibration measurement, speed, temperature, fouling value such as filter differential pressure, maintenance date, etc.

The term "upstream" shall be understood as being in the direction opposite to the flow of production. For example, the very first equipment zone where the production process starts is an upstream equipment zone. The term is, however, used as a relative sense within its meaning in the present disclosure. For example, an intermediate equipment zone that lies between the first equipment zone and the last equipment zone may also be called an upstream zone for the last equipment zone, and a "downstream" equipment zone for the first equipment zone. The last equipment zone is thus a downstream zone for the first equipment zone and for the intermediate equipment zone. Similarly, both the first equipment zone and the intermediate equipment zone are upstream of the last equipment zone.

"Target equipment zone" or "target zone" refers to any selectable zone downstream of the zone at which the input is being processed or transiting through, at or around the time the determination of the target equipment zone is done. The target zone may be the zone directly following the zone at which the input material is being processed, or it may be further downstream. By selectable, it is meant that said target zone is one of the at least two options for the input material and/or derivative material and/or the chemical product to be sent to. Hence, the target equipment zone may or may not be a final destination. For example, the target equipment zone may such an intermediate zone where process parameters and/or equipment operating conditions are adjusted for the input material and/or the derivative material to be processed in a particular manner, should at least one of the performance parameters meet a predefined criteria for sending the material for processing at such zone. There may even be other one or more target zones, for example, downstream of the target zone.

The target zone may even be a recirculation zone within which the material, i.e., input material or derivative material, is reprocessed until at least one desired performance parameter is reached. For example, if at least one of the performance parameters is not at to their respective desired value or range, the material may be diverted to the recirculation zone. For example, further processing such as treatment may be performed on the material until the at least one desired performance parameter is achieved. Treatment may be any form of processing suitable for achieving the desired performance parameters. Some non-limiting examples are: thermal treatment such as heating and/or cooling, chemical treatment such as adding additional material such as an additive to the material, mechanical treatment such as mixing or stirring.

The diverting or sending of the material and/or product to the determined target zone can be done in any suitable manner. As few non-limiting examples, it may be done using any suitable actuators and/or end-effector elements such as any one or more of: diverters, channels, valves, adjustable transport elements such as cross conveyors, etc.

"Industrial plant" or "plant" may refer, without limitation, to any technical infrastructure that is used for an industrial purpose of manufacturing, producing or processing of one or more industrial products, i.e., a manufacturing or production process or a processing performed by the industrial plant. The industrial product can, for example, be any physical product, such as a chemical, a biological, a pharmaceutical, a food, a beverage, a textile, a metal, a plastic, a semiconductor. Additionally, or alternatively, the industrial product can even be a service product, for example, recovery or waste treatment such as recycling, chemical treatment such as breakdown or dissolution into one or more chemical products. Accordingly, the industrial plant may be one or more of a chemical plant, a process plant, a pharmaceutical plant, a fossil fuel processing facility such as an oil and/or a natural gas well, a refinery, a petrochemical plant, a cracking plant, and the like. The industrial plant can even be any of a distillery, a treatment plant, or a recycling plant. The industrial plant can even be a combination of any of the examples given above or their likes.

The infrastructure may comprise equipment or process units such as any one or more of a heat exchanger, a column such as a fractionating column, a furnace, a reaction chamber, a cracking unit, a storage tank, an extruder, a pelletizer, a precipitator, a blender, a mixer, a cutter, a curing tube, a vaporizer, a filter, a sieve, a pipeline, a stack, a filter, a valve, an actuator, a mill, a transformer, a conveying system, a circuit breaker, a machinery e.g., a heavy duty rotating equipment such as a turbine, a generator, a pulverizer, a compressor, an industrial fan, a pump, a transport element such as a conveyor system, a motor, etc. Sometimes a combination of two or more of these may also be considered an equipment.

Further, an industrial plant typically comprises a plurality of sensors and at least one control system for controlling at least one parameter related to the process, or process parameter, in the plant. Such control functions are usually performed by the control system or controller in response to at least one measurement signal from at least one of the sensors. The controller or control system of the plant may be implemented as a distributed control system ("DCS") and/or a programmable logic controller ("PLC").

Thus, at least some of the equipment or process units of the industrial plant may be monitored and/or controlled for producing one or more of the industrial products. The monitoring and/or controlling may even be done for optimizing the production of the one or more products. The equipment or process units may be monitored and/or controlled via a controller, such as DCS, in response to one or more signals from one or more sensors. In addition, the plant may even comprise at least one programmable logic controller ("PLC") for controlling some of the processes. The industrial plant may typically comprise a plurality of sensors which may be distributed in the industrial plant for monitoring and/or controlling purposes. Such sensors may generate a large amount of data. The sensors may or may not be considered a part of the equipment. As such, production, such as chemical and/or service production, can be a data heavy environment. Accordingly, each industrial plant may produce a large amount of process related data.

Those skilled in the art will appreciate that the industrial plant usually may comprise instrumentation that may include different types of sensors. Sensors may be used for measuring one or more process parameters and/or for measuring equipment operating conditions or parameters related to the equipment or the process units. For example, sensors may be used for measuring a process parameter such as a flowrate within a pipeline, a level inside a tank, a temperature of a furnace, a chemical composition of a gas, etc., and some sensors can be used for measuring vibration of a pulverizer, a speed of a fan, an opening of a valve, a corrosion of a pipeline, a voltage across a transformer, etc. The difference between these sensors cannot only be based on the parameter that they sense, but it may even be the sensing principle that the respective sensor uses. Some examples of sensors based on the parameter that they sense may comprise: temperature sensors, pressure sensors, radiation sensors such as light sensors, flow sensors, vibration sensors, displacement sensors and chemical sensors, such as those for detecting a specific matter such as a gas. Examples of sensors that differ in terms of the sensing principle that they employ may for example be: piezoelectric sensors, piezoresistive sensors, thermocouples, impedance sensors such as capacitive sensors and resistive sensors, and so forth.

The industrial plant may even be part of a plurality of industrial plants. The term "plurality of industrial plants" as used herein is a broad term and is to be given its ordinary and customary meaning to a person of ordinary skill in the art and is not to be limited to a special or customized meaning. The term specifically may refer, without limitation, to a compound of at least two industrial plants having at least one common industrial purpose. Specifically, the plurality of industrial plants may comprise at least two, at least five, at least ten or even more industrial plants being physically and/or chemically coupled. The plurality of industrial plants may be coupled such that the industrial plants forming the plurality of industrial plants may share one or more of their value chains, educts and/or products. The plurality of industrial plants may also be referred to as a compound, a compound site, a Verbund or a Verbund site. Further, the value chain production of the plurality of industrial plants via various intermediate products to an end product may be decentralized in various locations, such as in various industrial plants, or integrated in the Verbund site or a chemical park. Such Verbund sites or chemical parks may be or may comprise one or more industrial plants, where products manufactured in the at least one industrial plant can serve as a feedstock for another industrial plant.

"Production process" refers to any industrial process which when, used on, or applied to the input material provides the chemical product. The chemical product is thus provided by transforming the input material either directly, or via one or more derivative materials, via the production process to result in the chemical product. The production process can thus be any manufacturing or treatment process involving at least partially one or more chemical processes or a combination of a plurality of processes that are used for obtaining the chemical product. The production process may even include packaging and/or stacking of the chemical product. The production process may thus be a combination of chemical and physical processes.

The terms "to manufacture", "to produce" or "to process" will be used interchangeably in the context of the production process. The terms may encompass any kind of application of an industrial process including a chemical process to the input material that results in one or more chemical products.

"Chemical product" in this disclosure may refer to any industrial product, such as chemical, pharmaceutical, nutritional, cosmetic, or biological product, or even any of their combination. The chemical product may either consist entirely of natural components, or it may at least partially comprise one or more synthetic components. Some non-limiting examples of the chemical product are, organic or inorganic compositions, monomers, polymers, foams, pesticides, herbicides, fertilizers, feed, nutrition products, precursors, pharmaceuticals or treatment products, or any one or more of their components or active ingredients. In some cases, the chemical product may even be a product usable by an end-user or consumer, for example, a cosmetic or pharmaceutical composition. The chemical product may even be a product that is usable for making further one or more products, for example, the chemical product may be a synthetic foam usable for manufacturing soles for shoes, or a coating usable for automobile exterior. The chemical product may be in any form, for example, in the form of solid, semi-solid, paste, liquid, emulsion, solution, pellets, granules, beads, particles such as thermoplastic polyurethane ("TPU") particles, or powder.

As such chemical products can be difficult to trace or track especially during their production process. During production, material such as the input material may be mixed with other material, and/or the input material may be split in different parts down the production chain, for example, for processing in different ways. The input material may be transformed more than once, for example to one or more derivative materials before being transformed to the chemical product. Sometimes, the chemical product may be split and packaged in different packages. Although in some cases it may be possible to label the packaged chemical product or its portions, it may be hard to attach the specifics of the production process which were responsible for producing that specific chemical product or its portions. In many cases, the input material and/or the chemical product may be in a form where it is difficult to label them physically. The present teachings thus provide ways in which one or more object identifiers can also be used for overcoming such limitations.

The production process may be continuous, in campaigns, for example, when based on catalysts which require recovery, it may be a batch chemical production process. One main difference between these production types is in the frequencies occurring in the data that is generated during production. For example, in a batch process the production data extends from start of the production process to the last batch over different batches that have been produced in that run. In a continues setting, the data is more continuous with potential shifts in operation of the production and/or with maintenance driven down times.

"Process data" refers to data comprising values, for example, numerical or binary signal values, measured during the production process, for example, via the one or more sensors. The process data may be time-series data of one or more of the process parameters and/or the equipment operating conditions. Preferably, the process data comprise temporal information of the process parameters and/or the equipment operating conditions, e.g., the data contain time stamps for at least some of the data points related to the process parameters and/or the equipment operating conditions. More preferably, the process data comprise time-space data, i.e., temporal data and the location or data related to one or more equipment zones that are located physically apart, such that time-space relationship can be derived from the data. The time-space relationship can be used, for example for computing the location of the input material at a given time.

"Real-time process data" refers to the process data that are measured or are in a transient state essentially while a specific input material is being processed using the production process. For example, the real-time process data for the input material is the process data from or around the same time as the processing of the input material using the production process. Here, around the same time means with little or no time delay. The term "real-time" is understood in the technical field of computers and instrumentation. As a specific non-limiting example, a time delay between a production occurrence during the production process being performed on the input material and the process data being measured or read-out is less than 15 s, specifically of no more than 10 s, more specifically of no more than 5 s. For high throughput processing the delay is less than a second, or less than a couple of milliseconds, or even lower. The real-time data can thus be understood as a stream of time-dependent process data being generated during the processing of the input material.

"Process parameters" may refer to any of the production process related variables, for example any one or more of, temperature, pressure, time, level, etc.

"Input material" may refer to at least one feedstock or unprocessed material that is used for producing the chemical product. The input material may be any organic or inorganic substance or even their combination. Thus, the input material may even be a mixture, or it may comprise a plurality of organic and/or inorganic components in any form. In some cases, the input material may even be a derivative material or an intermediate processed material, for example as received or transferred from an upstream equipment zone. A few non-limiting examples of the input material can be any one or more of: polyether alcohol, polyether diol, polytetrahydrofuran, polyester diol such as based on adipic acid and butane-1,4-diol, isocyanates, filler material - either organic or inorganic material such as wood powder, starch, flax, hemp, ramie, jute, sisal, cotton, cellulose or aramid fibers, silicates, barite, glass spheres, zeolites, metals or metal oxides, talc, chalk, kaolin, aluminum hydroxide, magnesium hydroxide, aluminum nitrite, aluminum silicate, barium sulfate, calcium carbonate, calcium sulfate, silica, quartz powder, aerosil, clay, mica or wollastonite, iron powder, glass spheres, glass fibers or carbon fibers.

As a further non-limiting example, the input material may be methylene diphenyl diisocyanate ("MDI") and/or polytetrahydrofuran ("PTHF") which is subjected to at least a part of the production process to obtain a thermoplastic polyurethane. It will be appreciated that the input material is thus chemically processed in one or more equipment zones to obtain the thermoplastic polyurethane, which may in some cases be a derivative material. The derivative material is further processed for obtaining the chemical product. For example, the thermoplastic polyurethane ("TPU") may be further processed in one or more further equipment zones to obtain an expanded thermoplastic polyurethane ("ETPU"). The ETPU may, for example, be the chemical product. In some cases, however, the TPU itself may even be the chemical product which is sent to a downstream customer or facility for further processing.

"Input material data" refers to data related to one or more characteristics or properties of the input material. Accordingly, the input material data may comprise any one or more of the values indicative of properties, such as quantity or amount, of the input material. Alternatively, or in addition, the value indicative of the quantity may be fill degree and/or mass flow of the input material. The values are preferably measured via one or more sensors operatively coupled to or included in the equipment. Alternatively, or in addition, the input material data may comprise sample/test data related to the input material. Alternatively, or in addition, the input material data may comprise values indicative of any physical and/or chemical characteristics of the input material, such as any one or more of, density, concentration, purity, pH, composition, viscosity, temperature, weight, volume, etc. In cases when the upstream equipment zone is downstream of a previous equipment zone, the input material data may comprise a part of data from the object identifier of the previous equipment zone, for example, the input material data may then comprise a reference or link to the object identifier of the previous zone or even in some cases at least a part of the process data from the previous object identifier.

It has to be mentioned that the input material being processed by the processing equipment of an underlying chemical production environment is divided into physical or real-world packages, in the following called "package objects" (or "physical packages" or "product packages", respectively). The package size of such package objects can be fixed, e.g. by material weight or by material amount, or can be determined based on a weight or amount, for which considerably constant process parameters or equipment operation parameters can be provided by the processing equipment. Such package objects can be created from an input liquid and/or solid raw material by means of a dosing unit.

The subsequent processing of such package objects is managed by means of corresponding data objects which include so-called "Object identifiers", which are assigned to each package object via a computing unit being coupled with the mentioned equipment, or even being a part of the equipment. The data objects, including the corresponding "Object identifiers" of an underlying package object, are stored at a memory storage element of the computing unit.

The data objects can be generated in response to a trigger signal being provided via the equipment, preferably in response to the output of a corresponding sensor being arranged at each of an equipment unit. As mentioned above, an underlying industrial plant may include different types of sensors, e.g. sensors for measuring one or more process parameters and/or for measuring equipment operating conditions or parameters related to the equipment or the process units.

A mentioned "Object identifier", more particularly, refers to a digital identifier for its respective input material. For example, the upstream object identifier is provided for the input material. Similarly, a historical upstream object identifier corresponds to a specific historical input material that was processed earlier. The object identifier is preferably generated by a computing unit. The providing or generation of the object identifier may be triggered by the equipment, or in response to a trigger event or signal, for example from the upstream equipment zone. The object identifier is stored in a memory storage element or memory storage operatively coupled to the computing unit. The memory storage may comprise, or it may be a part of, at least one database. Accordingly, the object identifier may even be a part of the database. It will be appreciated that the object identifier may be provided via any suitable manner, such as it may be transmitted, received or it may be generated.

"Memory storage" may refer to a device for storage of information, in the form of data, in a suitable storage medium. Preferably, the memory storage is a digital storage suitable for storing the information in a digital form which is machine-readable, for example digital data that are readable via a computer processor. The memory storage may thus be realized as a digital memory storage device that is readable by a computer processor. The memory storage may at least partially be implemented in a cloud service. Further preferably, the memory storage on the digital memory storage device may also be manipulated via a computer processor. For example, any part of the data recorded on the digital memory storage device may be written and/or erased and/or overwritten, partially or wholly, with new data by the computer processor.

"Computing unit", i.e., any one or more of the computing units, may comprise, or it may be, a processing means or computer processor such as a microprocessor, microcontroller, or their like, having one or more processing cores. In some cases, the computing unit may at least partially be a part of the equipment, for example it may be a process controller such as programmable logic controller ("PLC") or a distributed control system ("DCS"), and/or it may be at least partially be a remote server and/or cloud service. Accordingly, the computing unit may receive one or more input signals from one or more sensors operatively connected to the equipment or the plurality of equipment zones. If the computing unit is not a part of the equipment, it may receive one or more input signals from the equipment or equipment zones. Alternatively, or in addition, the computing unit may control one or more actuators or switches operatively coupled to the equipment. The one or more actuators or switches operatively may even be a part of the equipment. The computing unit is operatively coupled to the equipment or the plurality of equipment zones.

Accordingly, the computing unit may be able to manipulate one or more parameters related to the production process by controlling any one or more of the actuators or switches and/or end effector units, for example via manipulating one or more of the equipment operating conditions. The controlling is preferably done in response to the one or more signals retrieved from the equipment.

"End effector unit" or "end effector" in this context refers to a device that is either a part of the equipment and/or is operatively connected to the equipment, and hence controllable via the equipment and/or the computing unit, with a purpose to interact with the environment around the equipment. As a few non-limiting examples, the end effector may be a cutter, gripper, sprayer, mixing unit, extruder tip, or their likes, or even their respective parts that are designed to interact with the environment, for example, the input material and/or the chemical product.

"Property" or "properties" when it comes to the input material, may refer to any one or more of quantity of the input material, batch information, one or more values specifying quality such as purity, concentration, viscosity, or any characteristic of the input material.

"Interface" may be a hardware and/or a software component, either at least partially a part of the equipment, or a part of a computing unit, e.g., via which the object identifier is provided. For example, the interface may be an application programming interface ("API"), In some cases, the interface may also connect to at least one network, for example, for interfacing two pieces of hardware components and/or protocol layers in the network. For example, the interface may be an interface between the equipment and the computing unit. In some cases, the equipment may be communicatively coupled to the computing unit via the network. Thus, the interface may even be a network interface, or it may comprise the network interface. In some cases, the interface may even be a connectivity interface, or it may comprise the connectivity interface.

"Network interface" refers to a device or a group of one or more hardware and/or software components that allow an operative connection with the network.

"Connectivity interface" refers to a software and/or hardware interface for establishing communication such as transfer or exchange or signals or data. The communication may either be wired, or it may be wireless. Connectivity interface is preferably based on or it supports one or more communication protocols. The communication protocol may a wireless protocol, for example: short distance communication protocol such as Bluetooth^{®}, or WiFi, or long communication protocol such as cellular or mobile network, for example, second-generation cellular network or ("2G"), 3G, 4G, Long-Term Evolution ("LTE"), or 5G. Alternatively, or in addition, the connectivity interface may even be based on a proprietary short distance or long distance protocol. The connectivity interface may support any one or more standards and/or proprietary protocols. The connectivity interface and the network interface may either be the same unit or they may be different units.

"Network" discussed herein may be any suitable kind of data transmission medium, wired, wireless, or their combination. A specific kind of network is not limiting to the scope or generality of the present teachings. The network can hence refer to any suitable arbitrary interconnection between at least one communication endpoint to another communication endpoint. Network may comprise one or more distribution points, routers or other types of communication hardware. The interconnection of the network may be formed by means of physically hard wiring, optical and/or wireless radio-frequency methods. The network specifically may be or may comprise a physical network fully or partially made by hardwiring, such as a fiber-optical network or a network fully or partially made by electrically conductive cables or a combination thereof. The network may at least partially comprise the internet.

Hence, it will be appreciated that at least a part of the respective subset of process data is appended to the object identifier. For example, either the subset of real-time process data which the input material is processed by the upstream equipment zone is included in the upstream object identifier in its entirely, or a selected part of said subset data is appended or saved. Thus, a snapshot of the real-time process data that was relevant for processing the input material in the upstream equipment zone is made available or linked with the upstream object identifier. Whether the subset of real-time process data is saved in its entirety, or a part thereof may, for example, be based on a determination via any of the computing units regarding which part of subset of process data should be appended to the object identifier. The determination may, for example, be done based upon most dominant the process parameters and/or equipment operating conditions than have influence on the desired properties of the chemical product. This can be advantageous in certain cases, especially when the relevant real-time process data is large in volume, so rather than appending a large amount of data, to the upstream object identifier, the computing unit may determine which of the subset of the real-time process data is to be appended. Hence, the part of the real-time process data appended to the object identifier may be determined via the computing unit. Furthermore, the determination can be based upon one or more ML models. Such models will be discussed in more detail following in this disclosure.

According to further an aspect, the upstream object identifier is also appended with process specific data. The process specific data may be any one or more of, enterprise resource planning ("ERP") data, such as an order number and/or production code and/or production process recipe and/or batch data, recipient data, and/or a digital model related to the transformation of the input material to the chemical product. The ERP data may be received from an ERP system related to the industrial plant.

The digital model may be any one or more of: a computer readable mathematical model representing one or more physical and/or chemical changes that are related to the transformation of the input material to the chemical product. The recipient data may for example be data related to one or more customer orders and/or specifications. The batch data may be related to the batch under production and/or data related to the previous products manufactured via the same equipment. By doing so, traceability of the chemical product can be further improved by bundling the associated process specific data. More specifically, the batch data can be used to more optimally sequence the production of chemical products that are produced at least partially via the same equipment, but which chemical products have one or more different properties or specifications. For example, the production of such chemical products can then be adjusted and/or sequenced in such a manner that a subsequent batch is least affected due to its prior batch. For example, if two or more chemical products are of different colors, then the sequence of their production may be determined via the computing unit such that the later manufactured product is least affected due to the prior manufactured chemical product in terms to traces of color from the previous product.

"Performance parameter" may be, or it may be indicative of, or it may be related to, any one or more properties of the chemical product. Accordingly, the performance parameter is such a parameter that should satisfy one or more predefined criteria indicating suitability, or a degree of suitability, of the chemical product for a particular application or use. It will be appreciated that in certain cases, the performance parameter may indicate a lack of suitability, or a degree of unsuitability, for a particular application or use of the chemical product. As non-limiting examples, the performance parameter may be any one or more of, strength such as tensile strength, hardness such as Shore hardness, density such as bulk density, color, concentration, composition, viscosity e.g., melt viscosity, melt flow value ("MFV"), stiffness such as Young's modulus value, purity or impurity such as parts per million ("ppm") value, failure rate such as mean time to failure ("MTTF"), or any one or more values or value ranges, for example determined via tests using the predefined criteria. The performance parameter is thus representative of the performance or quality of the chemical product. The predefined criteria may, for example, be one or more reference values or ranges with respect to which the performance parameter of the chemical product is compared to, for determining the quality or performance of the chemical product. The predefined criteria may have been determined using one or more tests such as lab tests, reliability or wear tests, thus defining the requirements on the performance parameter for the chemical product to be suitable for one or more particular uses or applications. In some cases, the performance parameter may be related to or measured from the properties of a derivative material.

It will be appreciated that "zone-specific" in the present context refers to pertaining to a specific equipment zone, for example the upstream equipment zone. Thus, at least one of the zone-specific performance parameters may either be computed for the upstream equipment zone and/or one or more of those may be computed, by the computing unit, for one or more equipment zones that are downstream of the upstream equipment zone. Thus, the predicted parameters may either relate directly to the chemical product and/or they may relate to one or more derivative materials that are transformed to the chemical product.

Usually, performance parameters are determined from one or more samples of the chemical product and/or the derivative material collected during and/or after production. The samples may be brought to a laboratory and analyzed for determining the performance parameters. It will be appreciated that the whole activity of collecting samples, processing or testing them, and then analyzing the test results can take significant time and resources. There can thus be a significant delay between collecting of the samples and implementing any adjustments in the input material and/or process parameters and/or equipment operating conditions. This delay or lag may either result in sub-optimal or lower quality chemical products being produced, or in the worst case, the production may be required to be halted until the samples have been analyzed and any corrective action by adjusting the input material and/or process parameters and/or equipment operating conditions has been undertaken.

As a solution to at least reducing the effect of the lag in the sampling approach for adjust the input material and/or process parameters and/or equipment operating conditions, the proposed computing of at least one zone-specific performance parameter can be used.

According to an aspect, the computing of at least one zone-specific performance parameter is done using a model, which is at least partly an analytical computer model. Additionally, or alternatively, the model may at least partly be one or more machine learning ("ML") models. The ML model may be trained using the historical data, e.g., from the one or more historical object identifiers.

In the context of the present teachings, an ML model may be, or it may comprise, a prediction model that when trained using the historical data, preferably, data from historical object identifiers, results in a data driven model. "Data driven model" refers to a model that is at least partially derived from data, in this case from historical data. In contrast to a rigorous model that is purely derived using physio-chemical laws, a data driven model can allow describing relations that cannot be modelled by physio-chemical laws. The use of data driven models can allow to describe relations without solving equations from physio-chemical laws. This can reduce computational power and/or improve speed.

The data driven model may be a regression model. The data driven model may be a mathematical model. The mathematical model may describe the relation between provided input and computed output as a function. For example, when the subset is provided at input to the ML model, the model computes at least one of the performance parameters as output by applying the function.

Thus, in the present context, the data-driven model, preferably data-driven machine learning ("ML") model or a merely data-driven model, refers to a trained mathematical model that is parametrized according to the respective training data set, such as upstream historical data or downstream historical data, to reflect reaction kinetics or physio-chemical processes related to the respective production process. An untrained mathematical model refers to a model that does not reflect reaction kinetics or physio-chemical processes, e.g. the untrained mathematical model is not derived from physical law providing a scientific generalization based upon empirical observation. Hence, the kinetic or physio-chemical properties may not be inherent to the untrained mathematical model. The untrained model does not reflect such properties. Feature engineering and training with the respective training data sets enable parametrization of the untrained mathematical model. The result of such training is a merely data-driven model, preferably data-driven ML model, which as a result of the training process, preferably solely as a result of the training process, reflects reaction kinetics or physio-chemical processes related to the production process.

The model may even be a hybrid model. The hybrid model may refer to a model that comprises first-principles parts, the analytical model or so called white box, as well as data-driven parts as explained previously, so called black box. The model may comprise a combination of a white-box-model and a black-box-model and/or a grey-box-model. The white-box-model may be based on physio-chemical laws. The physio-chemical laws may be derived from first principles. The physio-chemical laws may comprise one or more of chemical kinetics, conservation laws of mass, momentum and energy, particle population in arbitrary dimension. The white-box-model may be selected according to the physio-chemical laws that govern the respective production process or parts thereof. The black-box-model may be based on the historical data, for example from one or more historical object identifiers. The black-box-model may be built by using one or more of machine learning, deep learning, neural networks, or other form of artificial intelligence. The black-box-model may be any model that yields a good fit between the training data set and test data. The grey-box-model is a model that combines a partial theoretical structure with data to complete the model.

As used herein, the term "machine learning" or "ML" may refer to a statistical method that enables machines to "learn" tasks from data without explicitly programming. Machine learning techniques may comprise "traditional machine learning"-the workflow in which one manually selects features and then trains the model. Examples of traditional machine learning techniques may include decision trees, support vector machines, and ensemble methods. In some examples, the data driven model may comprises a data driven deep learning model. Deep learning is a subset of machine learning modeled loosely on the neural pathways of the human brain. Deep refers to the multiple layers between the input and output layers. In deep learning, the algorithm automatically learns what features are useful. Examples of deep learning techniques may include convolutional neural networks ("CNNs"), recurrent neural networks such as long shortterm memory ("LSTM"), and deep Q networks.

In the present disclosure, the terms "ML model" and "trained ML model" may be used interchangeably. Although it will be indicated or it will be clear for the persons skilled in the art, which kind of data the particular ML model has been trained with to be able to perform the intended function.

Chemical production can be a data heavy environment, which produces lots of data from different equipment. It will also be appreciated that the teachings as proposed also make the realization of a quality control method or system suitable and more efficient for edge computing in an industrial plant, especially a chemical plant. Monitoring such as safety and/or quality control can thus be achieved essentially on the spot, or on-the-fly, with reduced computational resources such as processing power and/or memory requirements as the object identifiers provide highly targeted data sets of relevant data for computation of the performance parameter. It may also be possible to reduce latency in the computation, thus making sure that there is enough time for number crunching algorithms without slowing down the production process. It can also make the training process for the ML model faster and more efficient.

Due to similar reasons, it also makes the present teachings suitable for cloud-computing because datasets can be made compact and efficient. Many cloud service providers operate with a pay-per-use model based on the utilization of the computational resources, so costs can be reduced and/or the computational power can be more efficiently utilized.

Thus, according to an aspect, the model, at least partly at least one ML model may be trained using the data from the one or more historical object identifiers, e.g., one or more historical upstream object identifiers and/or historical downstream object identifiers. The data used for training the ML model may also include historical and/or current laboratory test data, or data from the past and/or recent samples of the chemical product and/or the derivative material. For example, quality data from one or more analyses such as image analysis, laboratory equipment or other measurement techniques may be used.

The at least one ML model trained with the data from historical upstream object identifiers can thus be used for predicting one or more of the zone-specific performance parameters related to the chemical product. At least some of the manual sampling and testing requirements can thus be removed, thus saving time and resources.

Thus, for computing the at least one zone-specific performance parameter the ML model which is trained using the historical data may receive as an input, the input material data and at least a part of the subset of the real-time process data. The ML model can thus provide the at least one zone-specific performance parameter as computed value. One or more of such computed values may be used for determining the target zone. Moreover, such an ML model can also be used for monitoring the production process and flagging any quality control issues at an early stage.

According to another aspect, the model or the ML model may also provide at least one confidence value indicative of the confidence level for the at least one zone-specific performance parameter. The confidence value may also be appended to the upstream object identifier, for example as metadata. Should the confidence level of the prediction or computation of at least one zone-specific performance parameter fall below an accuracy threshold value, a warning may be triggered at the control system for production. The warning may be generated as a warning signal, for example to initiate a physical test of a sample for lab analysis. This can have an advantage that rather than at certain times performing lab analysis on the samples collected from production, the such analysis can be done when it is needed. The requirement of costly and time-consuming manual quality control such as lab analysis can be further reduced.

In some cases, the target equipment zone determination may be done in response to the confidence value.

Thus, according to an aspect, the method may comprise:
- determining, in response to at least one of the performance parameters and/or the confidence value, a target equipment zone where the input material and/or chemical product is to be sent.

It can thus be prevented that material or product that is not sure to meet quality requirements set forth by one or more of the performance parameters is not mixed at a zone where properly sorted material or product is present or is to be sent.

In some cases, in response to the confidence level of the prediction or computation of at least one zone-specific performance parameter falling below the accuracy threshold value, a sampling object identifier is automatically provided, e.g, via the interface. Thus, in such cases, the target zone may even be a sampling zone. The processing unit may append the subset of relevant process data to the sampling object identifier for the relevant material, and also append the at least one zone-specific performance parameter to the sampling object identifier. This can allow the correct one or more samples to be automatically sorted and collected appropriately from production due to tracking provided by the sampling object identifier. Moreover, the samples may be analyzed together with the data from the sampling object identifier to find the cause of fall in the confidence level. It can allow determining whether it were the process parameters which caused the discrepancy, or the input material data, or perhaps their combination.

Complex relationships between various variables can thus be better understood and leveraged such that quality control process can be improved further. The results from the analysis may be used to retrain the ML model for improving future computations. For example, the sampling object identifier may be appended with the analysis results or data. The sampling object identifier data can be thus be included in the historical data and used for computing the at least one performance parameter in the future.

In some cases, the same model such as the ML model or an another one, may be used by the computing unit for determining which part or components of the subset of the real-time process data have most dominant effect on the chemical product. Accordingly, the computing unit is enabled to exclude those of the process parameters and/or equipment operating conditions which have negligible effect on the at least one zone-specific performance parameter. Relevance of the real-time process data that is appended for specific chemical products can hence be improved for their respective object identifier.

According to an aspect, the plurality of physically separated equipment zones also comprises a downstream equipment zone such that during manufacturing or production process the input material progresses from the upstream equipment zone to the downstream equipment zone. In some cases, the input material may be divided or reduced, e.g., in amount, prior to reaching the downstream equipment zone. Thus, according to further an aspect, a downstream object identifier is provided for at least a part of the input material at the downstream equipment zone. It will also be appreciated that in some cases, the at least a part of the input material may be called the derivative material. Similar to as it was discussed, the zone presence signal may be used to detect or compute when the input material or derivative material is at the downstream equipment zone such that the computing unit may determine an another subset of the real-time process data based on the downstream object identifier and the zone presence signal. The computing unit may thus compute an another at least one zone-specific performance parameter of the chemical product related to the downstream identifier based on the another subset of the real-time process data and another historical data, wherein the another historical data comprise data from one or more historical downstream object identifiers related to previously processed input material at the downstream equipment zone, and wherein each historical downstream object identifier is appended with at least a part of the process data which is indicative of the process parameters and/or equipment operating conditions that the previously processed input material was processed under in the downstream equipment zone. The downstream object identifier may thus be appended with the another at least one zone-specific performance parameter.

Thus, the method may also comprise:
- providing, via the interface, a downstream object identifier comprising at least a reference to the upstream object identifier;
- determining, via any of the computing units, an another subset of the real-time process data based on the downstream object identifier and the zone presence signal;
- computing, via any of the computing units, another at least one zone-specific performance parameter of the chemical product related to the downstream object identifier based on the another subset of the real-time process data and another historical data;
- determining, in response to at least one of the performance parameters, a target equipment zone where the input material and/or chemical product is to be sent.

It will be appreciated that at least one of the performance parameters may be the another at least one zone-specific performance parameter and/or at least one of the performance parameter determined at a zone upstream of the downstream equipment zone, for example at the upstream equipment zone.

As was discussed, the method may also comprise:
- appending, to the downstream object identifier, the another at least one zone-specific performance parameter.

Similar to as it was discussed, the another historical data may comprise data from one or more historical downstream object identifiers. At least one, preferably some, more preferably most, or each of the historical downstream object identifiers comprise data related to previously processed input material, for example, in the downstream equipment zone. At least one, preferably some, more preferably most, or each historical downstream object identifier has been appended with at least a part of the process data which is indicative of the process parameters and/or equipment operating conditions that the previously processed input material was processed. Preferably, the data appended in one or more of the historical downstream object identifiers relates to the previously processed input material processed under in the downstream equipment zone.

Furthermore, as it was discussed previously, the method may also comprise:
- appending, to the downstream object identifier, at least a part of the another subset of the real-time process data.

The downstream object identifier is thus appended with at least a part of the real-time process data from the downstream equipment zone. This way, the downstream object identifier may at least partially encapsulate or be enriched with, the upstream object identifier, or more specifically the data from the upstream object identifier which has been appended with at least a part of the subset of the real-time process data. Alternatively, the downstream object identifier may be linked to the upstream object identifier. In other words, the downstream object identifier is appended with the upstream object identifier. The downstream object identifier and the upstream object identifier may either be located at the same location or memory storage, or they may be located at different locations. Thus, the downstream object identifier is related to the upstream object identifier either by the upstream object identifier being at least partially being a part of the downstream object identifier, or by the upstream object identifier being appended to the downstream object identifier.

By doing this, finer visibility into the quality of various components of the production chain can be improved. For example, the performance parameters of each specific zones can also be used to track the quality of the material in that specific zone.

Similar to the above discussions pertaining to the upstream equipment zone, the models such as the ML models can also be applied to the downstream equipment zone. Some examples for the same are listed below.

For example, according to an aspect, a downstream model at least partly at least one downstream ML model, similar to the model discussed previously, may be trained based on the data from the one or more historical downstream object identifiers. The data used for training the downstream ML model may also include historical and/or current laboratory test data, or data from the past and/or recent samples of the chemical product and/or the derivative material. For example, quality data from one or more analyses such as image analysis, laboratory equipment or other measurement techniques may be used.

The at least one downstream ML model trained with the data from historical downstream object identifiers can thus be used for predicting one or more of the zone-specific performance parameters related to the chemical product. At least some of the sampling and testing requirements can thus be removed, thus saving time and resources.

Thus, for computing the at least one zone-specific performance parameter the downstream ML model which is trained using the historical downstream data may receive as an input, at least a part of the subset of the downstream real-time process data. The downstream ML model may thus provide the at least one zone-specific performance parameter as a computed value. Thus, such a downstream ML model can also be used together with the ML model for upstream equipment zone for monitoring the production process and flagging any quality control issues more finely at an early stage.

Similarly, the downstream ML model may also provide at least one downstream confidence value indicative of the confidence level for the at least one zone-specific performance parameter. The downstream confidence value may also be appended to the downstream object identifier, for example as metadata. Should the confidence level of the prediction or computation of at least one zone-specific performance parameter fall below an accuracy threshold value, a warning may be triggered at the control system for production. The warning may be generated as a warning signal, for example to initiate a physical test of a sample for lab analysis.

Those skilled in the art will appreciate that the terms "appending" or "to append" may mean including or attaching, for example saving different data elements such as metadata in the same database, or in the same memory storage element, either in adjacent or at different locations in the database or memory storage. The term may even mean linking, of one or more data elements, packages or streams at the same or different locations, in such a manner that the data packages or streams can be read and/or fetched and/or combined when needed. At least one of the locations may be a part of a remote server or even at least partially a part of a cloud-based service.

"Remote server" refers to one or more computers or one or more computer servers that are located away from the plant. The remote server may thus be located several kilometers or more from the plant. The remote server may even be located in a different country. The remote server may even be at least partially implemented as a cloud service or platform, for example as platform as a service ("PaaS"). The term may even refer collectively to more than one computer or server located on different locations. The remote server may be a data management system.

It will be appreciated that, in some cases, the input material after traversing through the upstream equipment zone may be substantially different in nature from the time when the input material entered the upstream equipment zone. Hence, as discussed, at entry of the input material at the downstream zone, the input material may have transformed to a derivative material or an intermediate processed material. However, for the sake of simplicity, and without losing generality of the present teachings, in the present disclosure the term input material may be used to refer also to the case when the input material during production process has converted to such an intermediate processed material or derivative material. For example, a batch of input material in the form of a mixture of chemical components may have traversed through the upstream zone on a conveyor belt where the batch is heated to induce a chemical reaction. As a result, when the input material enters the downstream zone, directly after exiting the upstream zone or after traversing also other zones, the material may have become a derivative material different in properties from the input material. However, as mentioned above, such derivative material can still be termed as the input material, at least because the relationship between such an intermediate processed material and the input material can be defined and determined via the production process. Moreover, in other cases, the input material may still essentially retain similar properties even after traversing the upstream zone or also other zones, for example when the upstream zone simply dries the input material or filters it to remove traces of an unwanted material. Hence, those skilled in the art will understand that the input material in intermediate zones may or may not be transformed to a derivative material.

In some cases, there may be one or more intermediate zones between the upstream equipment zone and the downstream equipment zone, but no separate object identifier is provided for such zones. The applicant has found it more advantageous to generate the downstream object identifier when the input material, or derivative material, is combined with other material, or when the input material, or derivative material, is divided or fragmented into multiple parts. Or more generally, after providing the object identifier, generation of a downstream object identifier or any further object identifiers may be done only at those zones where the material mass flow changes. Mass flow change may be a change in mass which is a result of adding or mixing of new material to the input material or the derivative material and/or removal or division of material from the input material or the derivative or intermediate processed material. Changes in mass, for example, due to removal of moisture or due to release of gasses caused by a chemical reaction during production in some cases may be excluded from occurrences which trigger the second or further object identifiers. Especially in a zone when there is no substantial change in the input material's mass, a further object identifier may not be provided. It is not essential here to specify a limit for "a substantial change" in mass because those skilled in the art will appreciate that it may depend, amongst other factors, upon the type of input material and/or chemical product being manufactured. For example, in some cases, a change in mass of 20% or more may be considered substantial, while in others 5% or more, or in some cases 1% or more, or perhaps even a lower % value. For instance, in cases of a precious product, a smaller change may be considered significant as compared to another product which is less precious.

As some examples, a determination of providing or generation of the object identifier at an equipment zone after the upstream equipment zone may be based upon any of; not providing a new object identifier if backmixing degree at the equipment zone is smaller than or nearly the size of the package at the zone preceding said equipment zone, providing a new object identifier if backmixing degree at the equipment zone is larger than the size of the package at the zone preceding said equipment zone, not providing a new object identifier at the equipment zone which is just a transport zone involving one or more transport systems or elements, providing a new object identifier for one or more components if the equipment zone involves separation of the material at said zone and the one or more components being the separated components of the material, providing at least one new object identifier at the equipment zone if it involves filling or packaging of the material into at least one package, each package comprising one or more chemical products.

As discussed, in case samples of the input material, the derivative material or the chemical product are collected for analysis, such samples may also be provided with a sample object identifier. The sample object identifier can in principle be similar to the object identifiers discussed in the present disclosure and thus appended relevant corresponding process data as discussed. Thus, the samples can also be digitally attached with an accurate snapshot of the production process that is relevant for the properties of said sample. The analysis and quality control can thus be further improved. Furthermore, the production process can be synergistically improved, e.g., based on improved training of one or more of the ML models.

According to another aspect, when the production process involves the input material being physically transported, flowed or moved in a zone or between zones, for example, using a transport element such as a conveyor system, the real-time process data may also include data indicative of the speed of the transport element and/or speed by which the input material is transported during the production process. The speed may be provided directly via one or more of the sensors and/or it may be calculated via the computing unit, for example, based on time of travel type measurements via the real-time process data, for example using the time of entry at the zone and the time of exit from the zone or the time of entry at another zone subsequent to the zone. The object identifier can thus be further enriched with processing time aspects in the zone, especially those which may have impact on one or more performance parameters of the chemical product. Moreover, by using the time stamps of entry and exit or a subsequent zone entry, requirement of a speed measuring sensor or device for the transport element can be obviated.

According to another aspect, each object identifier includes a unique identifier, preferably a globally unique identifier ("GUID"). At least tracing of the chemical product may be enhanced by attaching the GUID to each virtual package of the chemical product. Via the GUID, data management of process data such as time-series data can also be decreased and a direct correlation between the virtual/physical package, the production history, and the quality control history can be enabled.

As discussed regarding ML models, according to an aspect, an upstream ML model may be trained based on the data from one or more upstream object identifiers. The training data may also include past and/or current laboratory test data, or data from the past and/or recent samples of the derivative material and/or the chemical product. Furthermore, a downstream ML model may be trained based on the data from the downstream object identifiers. The training data may also include past and/or current laboratory test data, or data from the past and/or recent samples of the derivative material and/or the chemical product.

In addition to the previously discussed advantages with the previous ML models, having the trained models based on zones in the production line can allow more detailed tracking of material and forecasting their respective performance parameters and even the chemical product performance parameters.

In some production scenarios like batch production such models may be used on the fly to flag quality control issues not only for the chemical product as produced, but also for any derivative materials. Moreover, the material and/or chemical product can be sorted in one or more target zones such that more consistent properties of the products can be obtained.

Thus, any or each of the equipment zones may be monitored and/or controlled via an individual ML model, the individual ML model being trained based on data from the respective object identifier from that zone.

According to an aspect, providing of the respective object identifier for a zone may occur, or be triggered, in response to any one or more of the values indicative of properties of the input material and/or any one or more of the values from the equipment operating conditions and/or any one or more of the values of the process parameters reaching, meeting, or crossing a predefined threshold value. Any such values may be measured via one or more the sensors and/or switches. For example, the predefined threshold can be related to a weight value of the input material introduced at the equipment. Accordingly, when quantity such as the weight of the input material being received at the equipment reaches a predefined quantity threshold such as a weight threshold, a trigger signal may be generated. Certain examples of triggering events or occurrences for providing object identifiers were also discussed earlier in the present disclosure. In response to the trigger signal, or directly in response to the quantity or weight reaching the predefined weight threshold, the object identifier may be provided. The trigger signal can either be a separate signal, or it may just be an event, e.g., a particular signal meeting a predefined criteria such as threshold detected via the computing unit and/or the equipment. Thus, it will also be appreciated that, the object identifier may be provided in response to the quantity of the input material reaching a predefined quantity threshold. The quantity may be measured as weight as explained in the example above, and/or it may be any one or more other values such as level, fill or filling degree or volume and/or by summing up or by applying integration on the mass flow of the input material.

Thus, for example, the upstream object identifier may be provided in response to a trigger event or signal, said event or signal preferably being provided via the equipment or the upstream equipment zone. This may be done in response to output of any of the one or more sensors and/or switches operatively coupled to the upstream equipment. The trigger event or signal may relate to a quantity value of the input material, for example, to an occurrence of the quantity value reaching or meeting a predetermined quantity threshold value. Said occurrence may be detected via the computing unit and/or the upstream equipment, for example, using one or more weight sensor, level sensor, fill sensor, or any suitable sensor that can measure or detect the quantity of the input material.

An advantage of using quantity as a trigger for providing the upstream object identifier can be that any changes in the quantity of the material during the production process can be used as triggers for providing further one or more object identifiers as explained in the present teachings. The applicant has realized that this can provide an optimal way to segment generation of different object identifiers in an industrial environment for processing or producing one or more chemical products such that the input material, any derivative material, and eventually the chemical product can be traced while accounting for quantity or mass flow, essentially throughout the whole production chain and at least in some cases also beyond. By providing object identifiers just at points where material amount or quantity changed, e.g., when new material is introduced or is inputted, or where the material is split, the number of object identifiers can be minimized while retaining traceability of the material not only at the end points of production, but also within. Within equipment or production zones where no new material is added, or where no material is split, knowledge of the processes within such zones can be used to maintain observability within two adjacent object identifiers.

When viewed from another perspective, there can also be provided a system for improving a production process, the system being configured to perform any of the methods herein disclosed. Or, a system for improving a production process for manufacturing a chemical product at an industrial plant, the industrial plant comprising a plurality of physically separated equipment zones, and the product being manufactured by processing, via the plurality equipment zones, at least one input material using the production process, wherein the system is configured to perform any of the methods herein disclosed.

For example, there can be provided a system for improving a production process for manufacturing a chemical product at an industrial plant, the industrial plant comprising one or more computing units and a plurality of physically separated equipment zones, and the product being manufactured by processing, via the plurality equipment zones, at least one input material using the production process, wherein the system is configured to:
- provide, via an interface, an upstream object identifier comprising input material data;
   wherein the input material data is indicative of one or more properties of the input material,
- receive, at any of the computing units, real-time process data from one or more of the equipment zones; wherein the real-time process data comprises real-time process parameters and/or equipment operating conditions,
- determine, via any of the computing units, a subset of the real-time process data based on the upstream object identifier and a zone presence signal; wherein the zone presence signal indicates presence of the input material at a specific equipment zone during the production process,
- compute, via any of the computing units, at least one zone-specific performance parameter of the chemical product related to the upstream object identifier based on the subset of the real-time process data and historical data;
- determine, in response to at least one of the performance parameters, a target equipment zone where the input material and/or chemical product is to be sent.

Similarly, as to the method aspects, the system may also be configured to:
- append, to the upstream object identifier, the at least one zone-specific performance parameter.

When viewed from another perspective, there can also be provided a computer program comprising instructions which, when the program is executed by suitable one or more computing units, cause the computing units to carry out any of the methods herein disclosed. There can also be provided a non-transitory computer readable medium storing a program causing a suitable computing unit to execute any method steps herein disclosed.

For example, there can be provided a computer program, or a non-transitory computer readable medium storing the program, comprising instructions which, when the instructions are executed by suitable one or more computing units, operatively coupled to a plurality of for equipment zones for manufacturing a chemical product at an industrial plant by processing least one input material using a production process, causes the computing units to:
- provide, via an interface, an upstream object identifier comprising input material data;
   wherein the input material data is indicative of one or more properties of the input material,
- receive real-time process data from one or more of the equipment zones; wherein the real-time process data comprises real-time process parameters and/or equipment operating conditions,
- determine a subset of the real-time process data based on the upstream object identifier and a zone presence signal; wherein the zone presence signal indicates presence of the input material at a specific equipment zone during the production process,
- compute at least one zone-specific performance parameter of the chemical product related to the upstream object identifier based on the subset of the real-time process data and historical data;
- determine, in response to at least one of the performance parameters, a target equipment zone where the input material and/or chemical product is to be sent.

Similarly, as to the method aspects, any of the computing units may also be caused to:
- append, to the upstream object identifier, the at least one zone-specific performance parameter.

It will be appreciated that the computing units may be operatively coupled to the interface and/or the interface may be a part of any one or more of the computing units.

A computer-readable data medium or carrier includes any suitable data storage device on which is stored one or more sets of instructions (e.g., software) embodying any one or more of the methodologies or functions described herein. The instructions may also reside, completely or at least partially, within the main memory and/or within the processor during execution thereof by the computing unit, main memory, and processing device, which may constitute computer-readable storage media. The instructions may further be transmitted or received over a network via a network interface device.

The computer program for implementing one or more of the embodiments described herein may be stored and/or distributed on a suitable medium, such as an optical storage medium or a solid state medium supplied together with or as part of other hardware, but may also be distributed in other forms, such as via the internet or other wired or wireless telecommunication systems. However, the computer program may also be presented over a network like the World Wide Web and can be downloaded into the working memory of a data processor from such a network.

Furthermore, a data carrier or a data storage medium for making a computer program product available for downloading can be also provided, which computer program product is arranged to perform a method according to any of the aspects herein disclosed.

When viewed from another perspective, there can also be provided a computing unit comprising the computer program code for carrying out the method herein disclosed. Also, there can be provided a computing unit operatively coupled to a memory storage comprising the computer program code for carrying out the method herein disclosed.

That two or more components are "operatively" coupled or connected shall be clear to those skilled in the art. In a non-limiting manner, this means that there may at least be a communicative connection between the coupled or connected components e.g., via the interface or any other suitable interface. The communicative connection may either be fixed or it may be removable. Moreover, the communicative connection may either be unidirectional, or it may be bidirectional. Furthermore, the communicative connection may be wired and/or wireless. In some cases, the communicative connection may also be used for providing control signals.

"Parameter" in this context refers to any relevant physical or chemical characteristic and/or a measure thereof, such as temperature, direction, position, quantity, density, weight, color, moisture, speed, acceleration, rate of change, pressure, force, distance, pH, concentration and composition. The parameter may also refer to a presence or lack thereof of a certain characteristic.

"Actuator" refers to any component of that is responsible for moving and controlling a mechanism related to an equipment such as a machine, directly or indirectly. The actuator may be a valve, motor, a drive, or their likes. The actuator may be operable electrically, hydraulically, pneumatically, or any of their combination.

"Computer processor" refers to an arbitrary logic circuitry configured for performing basic operations of a computer or system, and/or, generally, to a device which is configured for performing calculations or logic operations. In particular, the processing means or computer processor may be configured for processing basic instructions that drive the computer or system. As an example, the processing means or computer processor may comprise at least one arithmetic logic unit ("ALU"), at least one floating-point unit ("FPU)", such as a math coprocessor or a numeric coprocessor, a plurality of registers, specifically registers configured for supplying operands to the ALU and storing results of operations, and a memory, such as an L1 and L2 cache memory. In particular, the processing means or computer processor may be a multicore processor. Specifically, the processing means or computer processor may be or may comprise a Central Processing Unit ("CPU"). The processing means or computer processor may be a ("CISC") Complex Instruction Set Computing microprocessor, Reduced Instruction Set Computing ("RISC") microprocessor, Very Long Instruction Word ("VLIW") microprocessor, or a processor implementing other instruction sets or processors implementing a combination of instruction sets. The processing means may also be one or more special-purpose processing devices such as an Application-Specific Integrated Circuit ("ASIC"), a Field Programmable Gate Array ("FPGA"), a Complex Programmable Logic Device ("CPLD"), a Digital Signal Processor ("DSP"), a network processor, or the like. The methods, systems and devices described herein may be implemented as software in a DSP, in a micro-controller, or in any other side-processor or as hardware circuit within an ASIC, CPLD, or FPGA. It is to be understood that the term processing means or processor may also refer to one or more processing devices, such as a distributed system of processing devices located across multiple computer systems (e.g., cloud computing), and is not limited to a single device unless otherwise specified.

"Computer-readable data medium" or carrier includes any suitable data storage device or computer readable memory on which is stored one or more sets of instructions (e.g., software) embodying any one or more of the methodologies or functions described herein. The instructions may also reside, completely or at least partially, within the main memory and/or within the processor during execution thereof by the computing unit, main memory, and processing device, which may constitute computer-readable storage media. The instructions may further be transmitted or received over a network via a network interface device.

### BRIEF DESCRIPTION OF THE SEVERAL VIEWS OF THE DRAWINGS

Certain aspects of the present teachings will now be discussed with reference to the following drawings that explain the said aspects by the way of examples. Since the generality of the present teachings is not dependent on it, the drawings may not be to scale. Certain features shown in the drawings can be logical features that are shown together with physical features for sake of understanding and without affecting the generality of the present teachings. To easily identify the discussion of any particular element or act, the most significant digit or digits in a reference number refer to the figure number in which that element is first introduced.
FIG. 1 illustrates certain aspects of a system according to the present teachings.
FIG. 2A illustrates a method aspect in accordance with the present teachings.
FIG. 2B illustrates a chart used for showing certain aspects of the present teachings.
FIG. 3 shows a first embodiment of a system and corresponding method according to the present teachings, by way of a combined block/flow diagram.
FIG. 4 shows a second embodiment of a system and corresponding method according to the present teachings, by way of a combined block/flow diagram.
FIG. 5 shows a third embodiment of a system and corresponding method according to the present teachings, by way of a combined block/flow diagram.
FIG. 6 shows a first embodiment of a graph-based database arrangement representing the topological structure of an industrial plant, or cluster of plants, including a plurality of equipment devices and according plurality of equipment zones between which the input material progresses during the manufacturing or production process.
FIG. 7 shows a second embodiment of a graph-based database arrangement as shown in FIG. 6.
FIG. 8 shows another embodiment of a system and corresponding method according to the present teachings using a cloud computing platform, by way of a combined block/flow diagram, where a machine learning (ML) process is implemented in the cloud.

### DETAILED DESCRIPTION

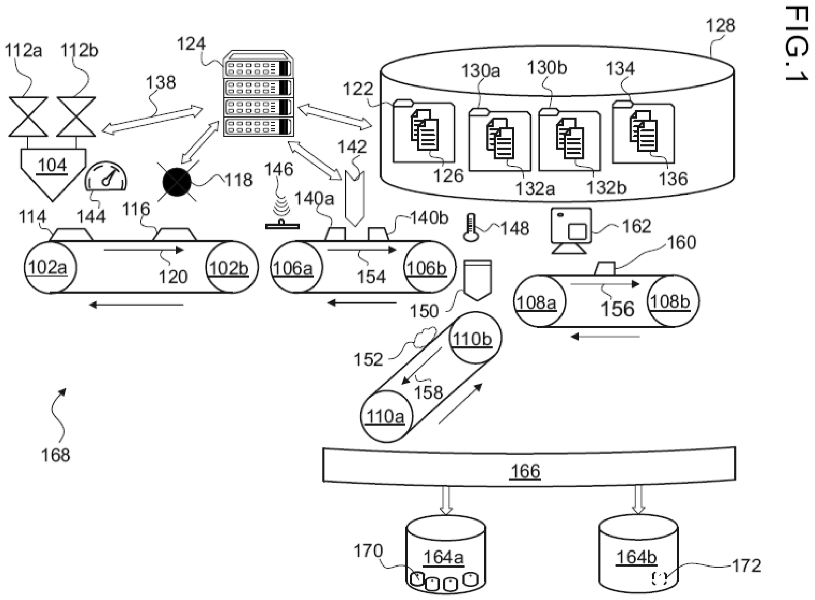

FIG. 1 shows an example of a system 168 for improving a production process for manufacturing a chemical product 170 an industrial plant. At least some of the method aspects will also be understood from the following discussion. The industrial plant comprises at least one equipment or a plurality of equipment zones for manufacturing or producing the chemical product 170 using the production process. The chemical product 170 may in any form, for example, a pharmaceutical product, a foam, a nutritional product, an agricultural product, or a precursor. For example, the chemical product 170 may be a thermoplastic polyurethane in granular form. The chemical product 170 may even be in batches, for example a package of 10 kg each. Due to the nature of such chemical products, they may be hard to trace in the production chain. However, it may be important to ensure that each component, e.g., each unit or package, or even parts inside have consistent and desired properties or quality. The present teachings can enable that.

The equipment zones are shown in FIG. 1 as equipment, for example, as a hopper or mixing pot 104, which may be a part of an upstream equipment zone. The mixing pot 104 receives input material, which may be a single material or it may comprise multiple components, for example, methylene diphenyl diisocyanate ("MDI") and/or polytetrahydrofuran ("PTHF"). Here, the input material is received in two parts, which are shown supplied to the mixing pot 104 via a first valve 112a and a second valve 112b respectively. The first valve 112a and a second valve 112b may also belong to the upstream equipment zone.

An object identifier, or in this case, an upstream object identifier 122 is provided for the input material 114. The upstream object identifier 122 may be a unique identifier, preferably a globally unique identifier ("GUID"), distinguishable from other object identifiers. The GUID may be provided dependent upon the specifics of the particular industrial plant and/or the specifics of the chemical product 170 being manufactured and/or specifics of the date and time, and/or specifics of the particular input material being used. The upstream object identifier 122 is shown provided at a memory storage 128. The memory storage 128 is operatively coupled to a computing unit 124. There may be more than one computing units, however in this example the computing unit 124 is shown as a combined unit. The memory storage 128 may even be a part of the computing unit 124. The memory storage 128 and/or the computing unit 124 may at least partially be a part of a cloud service.

The computing unit 124 is operatively coupled to the upstream equipment zone or the equipment belonging to the upstream equipment zone, for example, via a network 138, which may be any suitable kind of data transmission medium. The computing unit 124 may even be a part of the equipment in the plant, for example it may be at least partially be a part of the upstream equipment zone. The computing unit 124 may even be at least partially a plant control system, such as a DCS and/or PLC. The computing unit 124 may receive one or more signals from one or more sensors operatively coupled to the equipment of the upstream equipment zone. For example, the computing unit 124 may receive one or more signals from a fill sensor 144 and/or one or more sensors related to the transport elements 102a-b. Said sensors are also a part of the upstream equipment zone. The computing unit 124 may even at least partially to control the upstream equipment zone, or some parts thereof. For example, the computing unit 124 may control the valves 112a,b, e.g., via their respective actuators, and/or a heater 118 and/or the transport elements 102a-b. The transport elements 102a,b and others in the example of FIG. 1 are shown as a conveyor system that may comprise one or more motors and a belt driven via said motors such that it moves such that the input material 114 via the belt is transported in the direction of transverse 120 of the belt.

Without affecting the scope or generality of the present teachings, other kinds of transport elements can also be usable instead or in combination with a conveyor system. In some cases, any kind of equipment that involves a flow of material, e.g., one or more materials in and one or more materials out, may be termed a transport element. Thus, besides a conveyor system or belt, equipment such as extruder, pelletizer, heat exchanger, buffer silo, silo with mixer, mixer, mixing vessel, cutting mill, double cone blender, curing tube, column, separator, extraction, thin film vaporizer, filter, sieve may also be termed transport elements. Thus, it will be appreciated that presence of a transport system as a conveyor system may be optional, at least because in some cases material may move directly from one equipment to another via mass flow, or as normal flow via one equipment to another. For example, a material may move directly from a heat exchanger to a separator or even further such as to a column and so forth. Thus, in some cases, one or more transport elements or system may be inherent to an equipment.

The upstream object identifier 122 may be provided in response to a trigger signal or event, which may be a signal or an event related to a quantity of the input material. For example, the fill sensor 144 may be used to detect at least one quantity value such as fill degree and/or weight of the input material. When the quantity reaches a predetermined threshold, the computing unit 124 may automatically provide the first upstream object identifier 122 at the memory storage 128. The upstream object identifier 122 comprises data related to the input material, or input material data. The input material data is indicative of one or more property of the input material.

In some cases, the computing unit 124 may receive process data from all equipment or equipment zones in the industrial plant. The computing unit 124 may a subset of the real-time process data based on the upstream object identifier and a zone presence signal. For example, the trigger signal or event may also be used for generating the zone presence signal for the upstream equipment zone. The zone presence signal can hence be used for determining not only the process parameters and/or equipment operating conditions that are relevant for the processing of the input material 114 at the upstream equipment zone, but also the time aspect of said process parameters and/or equipment operating conditions which are included in the real-time process data. The computing unit 124 may compute at least one zone-specific performance parameter that is relevant for the chemical product 170, which is related to the upstream object identifier 122. The computation is based on a subset of real-time process data 126, which in this case is shown optionally appended at the upstream object identifier 122. The computation is also based on historical data which comprise data from one or more historical upstream object identifiers. Each historical upstream object identifier is related to the respective input material which was processed in the upstream equipment zone in the past. Each historical upstream object identifier is appended with at least a part of the process data which is indicative of the process parameters and/or equipment operating conditions that the previously processed input material was processed under in the upstream equipment zone.

The at least one zone-specific performance parameter is appended to the upstream object identifier 122, for example as metadata. Thus, the upstream object identifier 122 is enriched with the performance parameter that is related to the quality of the chemical product 170. Quality control process can thus be simplified and improved while improving traceability, e.g., by coupling the quality related data with the resulting chemical product 170.

The subset of real-time process data 126 from the upstream equipment zone may be data within the time window that the input material 114 was at the upstream equipment zone, or the time window may be even shorter thus just for the time that the input material 114 was processed via the mixing pot 104. The real-time process data can be used to determine the time window. Hence, the upstream object identifier 122 can be enriched with high relevance data by using the time-dimension of the real-time process data. Thus, object identifiers not only can be used to track the material in the production process, but also encapsulate high quality data that can make edge computing and/or cloud computing more effective. The object identifier data can be highly suitable for faster training and retraining of machine learning models. Data integration can also be simplified as the data encapsulated in the object identifiers can be more compact than traditional datasets.

The at least part of subset of real-time process data 126 is indicative of the process parameters and/or equipment operating conditions, i.e., the operating conditions of the mixing pot 104 and valves 112a-b, that the input material is processed under in the upstream equipment zone, for example, any one or more of, incoming mass flow, outgoing mass flow, filling degree, temperature, moisture, time stamps or time of entry, time of exit, etc. The equipment operating conditions in this case may be control signals and/or set-points of the valves 112a,b and/or the mixing pot 104. The subset of real-time process data 126 may be or it may comprise time-series data, which means that it may include time dependent signals, which may be obtained via one or more sensors, for example, output of the fill sensor 144. The time-series data may comprise signals that are continuous or any of them may be intermittent with regular or irregular time intervals. The subset of real-time process data 126 may even include one or more time-stamps, for example time of entry and/or time of exit, from the mixing pot 104. Thus, a particular input material 114 may be associated with the subset of real-time process data 126 relevant for that input material 114 via the upstream object identifier 122. The upstream object identifier 122 may be appended to other object identifiers downstream of the production process such that specific process data and/or equipment operating conditions can be correlated to a specific chemical product. Other important benefits were already discussed in other parts of this disclosure, e.g., in the summary section.

The conveyor system comprising the transport elements 102a,b and the associated belt may be considered an intermediate equipment zone which is downstream of the upstream equipment zone. The intermediate equipment zone in this example comprises a heater 118 that is used for applying heat to the input material traversing on the belt. The conveyor system may even comprise one or more sensors, for example any one or more of, speed sensor, weight sensor, temperature sensor, or any other kind of sensor for measuring or detecting the process parameters and/or properties of the input material 114 at the intermediate equipment zone. Any or all outputs of the sensors may be provided to the computing unit 124.

As the input material 114 progresses along the direction of transverse 120, it is applied heat via the heater 118. The heater 118 may be operatively coupled to the computing unit 124, i.e., the computing unit 124 may receive signals or real-time process data from the heater 118. Furthermore, the heater 118 may even be controllable via the computing unit 124, for example via one or more control signals and/or set-points. Similarly, the conveyor system comprising the transport elements 102a,b and the associated belt may also be operatively coupled to the computing unit 124, i.e., the computing unit 124 may receive signals or process data from the transport elements 102a,b. The coupling may for example be via the network. Furthermore, the transport elements 102a,b may even be controllable via the computing unit 124, for example via one or more control signals and/or set-points provided via the computing unit 124. For example, the speed of the transport elements 102a,b may be observable and/or controllable by the computing unit 124. Optionally, as the quantity of the input material 114 is constant or near constant in the intermediate equipment zone, a further object identifier may not be provided for the intermediate equipment zone. Thus, the process data from the intermediate equipment zone, i.e., from the heater 118 and/or the transport elements 102a,b may also be appended to the object identifier of the previous or preceding zone, i.e., the upstream object identifier 122. The appended subset of real-time process data 126 may thus be enriched to be further indicative of the process parameters and/or equipment operating conditions from the intermediate equipment zone, i.e., the operating conditions of the heater 118 and/or transport elements 102a,b, that the input material 114 is processed under in the intermediate equipment zone, for example, any one or more of, incoming mass flow, outgoing mass flow, one or more temperature values from the intermediate zone, time of entry, time of exit, speed of the transport elements 102a,b and/or belt, etc. The equipment operating conditions in this case may be control signals and/or set-points of the transport elements 102a,b and/or the heater 118. It will be clear that the subset of real-time process data 126 predominantly relates to the time-periods within which the input material 114 is present in the respective equipment zone. Thus, an accurate snapshot of the relevant process data for the specific input material 114 can be provided via the upstream object identifier 122. Further observability of the input material 114 may be extracted via the knowledge of the specific portion or part of the production process, e.g., a chemical reaction, within the intermediate equipment zone. Alternatively, or in addition, the speed by with the input material 114 traverses through the intermediate equipment zone can be used to extract further observability via the computing unit 124. In conjunction with the subset of real-time process data 126 with specific time-stamps, or the time-series data, and/or time of entry and/or time of exit of the input material 114 in the intermediate equipment zone, a more granular detail of conditions under which the input material 114 is processed in the intermediate equipment zone may be obtained from the upstream object identifier 122.

The data from the upstream object identifier 122 may be used for training one or more ML models for monitoring the production process and/or the specific portions thereof, for example, the portion of the production process within the upstream equipment zone and/or the intermediate equipment zone. The ML model and/or upstream object identifier 122 may even be used for correlating one or more performance parameters of the chemical product to the specifics of the production process in one or more zones.

It will be appreciated that as the input material 114 progresses along the direction of transverse 120, it may change its properties and may transform or convert to a derivative material 116. For example, as the heater 118 heats the input material 114, it may result in the derivative material 116. Those skilled in the art will appreciate that for simplicity and ease of understanding, the derivative material 116 may also be sometimes referred to as input material in the present teachings. For example, in context of the equipment zone or components under discussion, it will thus be clear in which phase the input material is within the production process as discussed in the description of this example.

Now discussing an example of a zone where a material is divided in multiple parts. FIG. 1 shows such a zone as a downstream equipment zone comprising a cutting mill 142 and second transport elements 106a,b. The derivative material 116 traversing along the direction of transverse 154 is divided or fragmented using the cutting mill 142, thus resulting in a plurality of parts, shown in this example as a first divided material 140a and a second divided material 140b.

Thus, according to an aspect of the present teachings, an individual object identifier may be provided for each part. In some cases though, an object identifier may only be provided for one of the parts, or for some of the parts, instead of providing an individual object identifier for each part. This may be the case, for example if tracking any of the parts is not of interest. For example, an object identifier may not be provided for a part of the derivative material 116 that is discarded. Now referring back to FIG. 1, a first downstream object identifier 130a is provided for the first divided material 140a and a second downstream object identifier 130b is provided for the second divided material 140b.

The first downstream object identifier 130a is appended with at least a part of a first subset of downstream real-time process data 132a and the second downstream object identifier 130b is appended with at least a part of a second subset of downstream real-time process data 132b. The first subset of downstream real-time process data 132a may be a copy of the second subset of downstream real-time process data 132b, or they may partly be the same data. For example, in cases when the first divided material 140a and the second divided material 140b undergo the same process, i.e., at essentially the same place and time, then the process data appended to the downstream object identifier 130a and the second downstream object identifier 130b may be the same or similar. If, however, within the downstream equipment zone the downstream object identifier 130a and the second downstream object identifier 130b were to be treated differently, the first subset of downstream real-time process data 132a and the second subset of downstream real-time process data 132b may be different from each other.

Those skilled in the art will appreciate that in some cases, however, optionally only one object identifier may be provided at the cutting mill 142 and then multiple object identifiers may be provided subsequent to the cutting mill 142 if the material processed via the cutting mill 142 is split in multiple parts. Thus, dependent upon the specifics of a particular production process, a cutting mill may or may not be a separation device. Similarly, in some cases no new object identifier may be provided for a cutting mill such that process data from the zone is appended to the preceding object identifier. New object identifier may thus be provided at the zones where the material is split and/or it is combined. For example, in some cases, the downstream object identifier 130a and the second downstream object identifier 130b may be provided after the cutting mill 142, for example at entry at the different zones subsequent to the cutting mill 142.

In this example, the downstream equipment zone also comprises an imaging sensor 146, which may be a camera or any other kind of optical sensor. The imaging sensor 146 may also be operatively coupled to the computing unit 124. The imaging sensor 146 may be used for measuring or detecting one or more properties of the derivative material 116 prior to entering the downstream equipment zone. This may for example be done to sort or divert the material that meets a given quality criteria, for example at least one of the performance parameters determined at the upstream equipment zone and/or the intermediate equipment zone. As mass flow of the material is altered in the downstream equipment zone, according to an aspect of the present teachings, another object identifier (not shown in FIG. 1) may have been provided prior to the downstream object identifier 130a and the second downstream object identifier 130b.

The providing of the downstream object identifier 130a and the second downstream object identifier 130b may be triggered in response to the derivative material 116 passing the quality criteria via the imaging sensor 146. By correlating data from the adjacent zones or from the object identifiers, for example, mass flow from the intermediate equipment zone and mass flow to the downstream equipment zone, the computing unit 124 may determine which specific input material 114 or derivative material 116 is related to the material entering the subsequent zone. Alternatively, or in addition, two or more of the time stamps may be correlated between the zones, for example time-stamp of exit from the intermediate equipment zone and time-stamp of detection via the imaging sensor 146 and/or entry at the downstream equipment zone. The speed of the transport elements 102a,b either measured directly via a sensor output or determined from two or more time-stamps can also be used to establish relationship between a specific packet or batch of input material and its object identifiers. It may thus even be determined where the specific chemical product 170 was within the production process at a given time, thus a time-space relationship may be established. Some or all of these aspects can be usable not only in improving the traceability of the chemical product 170 from input material to finished product, but also in monitoring and improving the production process and making it more adaptable and controllable.

As discussed, the first downstream object identifier 130a and the second downstream object identifier 130b are appended with the first subset of downstream real-time process data 132a and the second subset of downstream real-time process data 132b respectively from the downstream equipment zone. The first subset of downstream real-time process data 132a and the second subset of downstream real-time process data 132b may even be linked to or appended with the upstream object identifier 122. Similar to the previously discussed upstream object identifier 122, the first subset of downstream real-time process data 132a and the second subset of downstream real-time process data 132b are indicative of the process parameters and/or equipment operating conditions, i.e., the output of the imaging sensor 146, the operating conditions of the cutting mill 142 and the second transport elements 106a,b, that the derivative material 116 is processed under in the downstream equipment zone, for example, any one or more of, incoming mass flow, outgoing mass flow, filling degree, temperature, optical properties, time stamps, etc. The equipment operating conditions in this case may be control signals and/or set-points of the cutting mill 142 and/or the second transport elements 106a,b. The first subset of downstream real-time process data 132a and the second subset of downstream real-time process data 132b may comprise time-series data, which means that it may include time dependent signals, which may be obtained via one or more sensors, for example, output of the imaging sensor 146 and/or speed of the second transport elements 106a,b.

As the derivative material 116 proceeds after encountering the imaging sensor 146, it is moved towards the cutting mill 142 in the direction of transverse 154 driven by the second transport elements 106a,b. The second transport elements 106a,b are in this example shown as a part of a second conveyor belt system separate from the conveyor system comprising transport elements 102a,b. It will be appreciated that it the second conveyor belt system may even be a part of the same conveyor system comprising transport elements 102a,b. Accordingly, the downstream equipment zone may comprise some of the same equipment used in another zone.

As can be seen in FIG. 1, even though the first divided material 140a and the second divided material 140b go different ways later in production, their respective object identifier i.e., downstream object identifier 130a and the second downstream object identifier 130b allow following or tracking them individually through the remaining production process and in some cases also beyond. So, the first divided material 140a is shown diverted to its so called target zone. In this example, the second divided material 140b is shown diverted to its respective target zone.

After exiting the downstream equipment zone, the first divided material 140a is fed to an extruder 150, which is a target equipment zone for the first divided material 140a, determined in response to at least one of the performance parameters, e.g., computed at the upstream equipment zone and/or the intermediate equipment zone. The determination may be made via the computing unit 124 or another computing unit.

As seen, the second divided material 140b is transported for curing at a third equipment zone comprising a curing apparatus 162 and third transport elements 108a,b. The third equipment zone is thus a target equipment zone for the second divided material 140b, determined in response to at least one of the performance parameters, which may or may not be the same performance parameter as used for determining the target equipment zone for the first divided material 140a. The transport elements 108a,b shown are accordingly a non-limiting example, as discussed previously. It will be appreciated that the third equipment zone is downstream of the upstream equipment zone and the downstream equipment zone.

It can thus be determined even within the same production line, which material is more suitable for which specific parts of the production process. As can be seen the processes performed on the first divided material 140a and the second divided material 140b are different from each another in their respective target zones.

As the second divided material 140b is moved via a belt in the direction of transverse 156, it undergoes the curing process via the curing apparatus 162 to result on a cured second divided material 160. Since no substantial mass change may occur, according to an aspect, no new object identifier may be provided for the third equipment zone. Accordingly, as previously discussed, the process data from the third equipment zone may also be appended to the second downstream object identifier 130b. Similar to the above, the appended second subset of downstream real-time process data 132b may thus be enriched to be further indicative of the process parameters and/or equipment operating conditions from the third equipment zone, i.e., the operating conditions of the curing apparatus 162 and/or transport elements 108a,b, that the second divided material 140b is processed under in the third equipment zone, for example, any one or more of, incoming mass flow, outgoing mass flow, one or more temperature values from the third zone, time of entry, time of exit, speed of the transport elements 108a,b and/or belt, etc. The equipment operating conditions in this case may be control signals and/or set-points of the transport elements 102a,b and/or the curing apparatus 162.

Similarly, the first divided material 140a progresses to a fourth equipment zone comprising the extruder 150, a temperature sensor 148 and fourth transport elements 110a,b. Here too, as no substantial mass change may occur, according to an aspect, no new object identifier may be provided for the fourth equipment zone. Accordingly, as previously discussed, the process data from the fourth equipment zone may also be appended to the downstream object identifier 130a. Similar to the above, the appended first subset of downstream real-time process data 132a may thus be enriched to be further indicative of the process parameters and/or equipment operating conditions from the fourth equipment zone, i.e., the operating conditions of the extruder 150 and/or the temperature sensor 148 and/or transport elements 108a,b, that the first divided material 140a is processed under in the third equipment zone, for example, any one or more of, incoming mass flow, outgoing mass flow, one or more temperature values from the third zone, time of entry, time of exit, speed of the transport elements 110a,b and/or belt, etc. The equipment operating conditions in this case may be control signals and/or set-points of the transport elements 108a,b and/or the extruder 150. Thus, properties and dependencies of transformation of the first divided material 140a to an extruded material 152 may also be included in the downstream object identifier 130a. It will be appreciated that the fourth equipment zone is also downstream of the upstream equipment zone and the downstream equipment zone.

As can be appreciated, the number of individual object identifiers can be reduced while improving material and product monitoring throughout the production process.

As the extruded material 152 moves further in the direction of traverse 158 generated via the transport elements 108a,b, it may be collected in a collection zone 166. The collection zone 166 may be a storage unit, or it may be a further processing unit for applying further steps of the production process. In the collection zone 166, additional materials may be combined, for example, the cured second divided material 160 may be combined with the extruded material 152. Accordingly, a new object identifier may be provided as previously discussed. Such an object identifier is shown as a last downstream object identifier 134. The last downstream object identifier 134 may be appended with a subset of last zone real-time process data 136, which may include whole or a part of the downstream object identifier 130a and the second downstream object identifier 130b. The last downstream object identifier 134 is thus provided with the process parameters and/or equipment operating conditions from the collection zone 166, similar to as was discussed in detail in this disclosure. Depending upon the function or further processing if any done in the collection zone 166, data such as, any one or more of, incoming mass flow, outgoing mass flow, one or more temperature values from the collection zone 166, time of entry, time of exit, speed, etc. may be included as last zone real-time process data 136.

In some cases, individual lots from the collection zone 166 may be sorted and packaged and/or stored. Such a sorted lot is shown as product collection bin 164a. The products in the product collection bin 164a may be sent there based upon the determination made according to at least one of the performance parameters as were discussed. The product collection bin 164a may thus be a target equipment zone for such products. The performance parameters used for determining this may be any one or more performance parameters determined in any of the zones that are upstream of the product collection bin 164a. As quantities are being split again, an individual object identifier may be provided for each of the silos such that the chemical product 170 in its silo, i.e., the individual object identifier for the product collection bin 164a can be associated with the process data or conditions that the chemical product 170 is exposed to there. Also, the performance parameters associated with such plurality of products may be appended to the individual object identifier for the product collection bin 164a.

It will be appreciated that even though a single product collection bin 164a is shown, there may be a plurality of target zones may exist where products are automatically sorted and sent to according to their quality measure as discussed.

As will be appreciated, each of the object identifiers may be a GUID. Each may include wholly or partly data from the preceding object identifier, or they may be linked. The relevant quality data can thus be attached as a snapshot or traceable link to a particular chemical product 170.

As was also discussed, one or more ML models may be used for computing or predicting one or more zone specific performance parameters. It is also possible that each or some of the ML models also are configured to provide a confidence value indicative of the confidence level for the at least one zone-specific performance parameter. A warning may be generated as a warning signal, for example to initiate a physical test of a sample for lab analysis should the confidence level in predicting the performance parameter be low than a predetermined limit. It is also possible that in response to the confidence level of the prediction falling below an accuracy threshold value, a sampling object identifier is automatically provided via the interface. The sampling object identifier may be provided in a similar way and the computing unit 124 may append the subset of relevant process data to the sampling object identifier for the material which the sampling object identifier relates to, shown here as a sample material 172. The computing unit 124 may also append the at least one zone-specific performance parameter, which had low confidence level, to the sampling object identifier. The sample material 172 can thus be collected and verified and/or analyzed to further improve the quality control using object identifiers. It will also be appreciated that the sampling bin 164b may be a target zone for the sample material 172. Thus, reliability of sampling and sample collection is thus also improved.

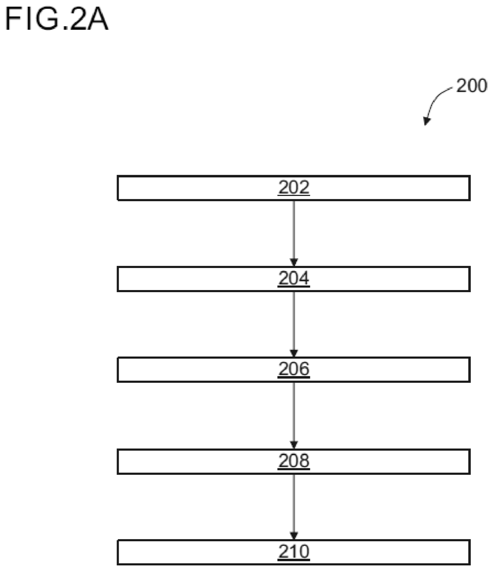

FIG. 2A illustrates a flow chart 200 or routine showing method aspects of the present teachings, especially as viewed from the first equipment zone. The routine may be executed by one or more computing units. In block 202, it is provided, via an interface, an upstream object identifier 122 comprising input material data. The input material data is indicative of one or more property of the input material 114. In block 204, it is received, via the interface, real-time process data from the equipment, or from one or more of the equipment zones. The real-time process data comprises process parameters and/or equipment operating conditions. In block 206, it is determined, a subset of real-time process data 126 based on the upstream object identifier 122 and a zone presence signal. The zone presence signal indicates presence of the input material 114 at a specific equipment zone during the production process. In this case, at the upstream equipment zone. In block 208, it is computed, at least one zone-specific performance parameter of the chemical product related to the upstream object identifier based on the subset of the real-time process data and historical data. The historical data may comprise data from one or more historical object identifiers related to previously processed input material, preferably in the upstream equipment zone. Preferably, each historical object identifier is appended with at least a part of the process data which is indicative of the process parameters and/or equipment operating conditions that the previously processed input material was processed under, e.g., in the upstream equipment zone. In block 210, it is determined, in response to at least one of the performance parameters, a target equipment zone where the input material 114 and/or chemical product 170 is to be sent.

As the input material progresses to a subsequent zone, it may be determined if another object identifier is to be provided or not. If not, then the process data from the subsequent zone may also be appended to the same object identifier. If it is determined that another object identifier is to be provided, then the process data from the subsequent zone is appended to the another object identifier. Details for each of these options, such as the intermediate equipment zone and the downstream equipment zone are discussed in detail in the present disclosure, for example, in the summary section as well as with reference to FIG. 1. Moreover, examples of target zones were discussed.

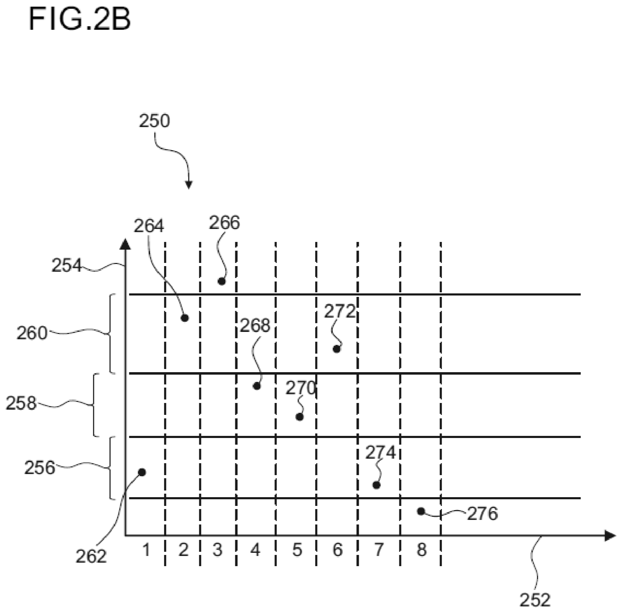

FIG. 2B shows a chart 250 that will be used to illustrate an example of how determination may be made for sending the input material and/or chemical product to a particular target zone. The chart has a horizontal axis 252, which represents items 1 - 8 which may be the input material or the product, for example in batches or any other suitable units. The cart also has a vertical axis 254, which represents a scale of a performance parameter. During the production process, for a plurality of chemical products, their performance parameter values may be randomly distributed along a certain range. A tolerance range may be understood as the maximum range of variations of one or more performance parameters within which a product or material may be acceptable or meet specifications for a particular use. The performance parameter may be used as a measure of quality of the chemical product. In practical production processes, the performance parameter may be randomly distributed due to statistical variations.

The term "item" will be used here to refer to the input material and/or chemical product. For example, a first item 262 is shown as a point that may represent a performance parameter value computed via the computing unit 124. In this case, the performance parameter of the first item 262 lies within a first range 256 shown along the vertical axis 254. Similarly, the performance parameter of the second item 264 lies within a third range 260, whereas the performance parameter of the third item 266 lies beyond the third range 260. In this example, the upper limit of the third range 260 and the lower limit of the first range 256 may be considered the tolerance range for the item to be acceptable. Hence, the computations of the performance parameters of the third item 266 and an eighth item 276 are examples of outliers which are outside specifications. Hence, according to the present teachings, the third item 266 and the eighth item 276 may be sent to a sampling zone which may be a target zone for these items.

The first range 256, the second range 258 and the third range 260 may be associated with individual target zones, for example a first target zone, a second target zone and a third target zone respectively.

The second item 264 and a sixth item 272 lie within the third range 260, hence these may be diverted to the third target zone. Similarly, a fourth item 268 and a fifth item 270 lie within the second range 258, hence these may be sent to the second target zone. Similarly, the first item 262 and a seventh item 274 lie within the first range 256, hence these may be sent to the first target zone.

The target zones may be such zones where the material is processed in a certain way, or they may be zones where the products are sorted according to the performance parameters. As it can be seen, the respective ranges 256 - 258 are narrower than the overall tolerance range, hence the present teachings can enable not only providing consistent quality products, but also traceability in ensured via their respective object identifiers.

Those skilled in the art will appreciate that the method steps, at least those which are performed via the computing unit may be performed in a "real-time" or near real-time manner. The terms are understood in the technical field of computers. As a specific example, a time delay between any two steps performed by the computing unit is no more than 15 s, specifically of no more than 10 s, more specifically of no more than 5 s. Preferably, the delay is less than a second, more preferably, less than a couple of milliseconds. Accordingly, the computing unit may be configured to perform the method steps in a real-time manner. Moreover, the software product may cause the computing unit to perform the method steps in a real-time manner.

The method steps may be performed, for example, in the order as shown listed in the examples or aspects. It shall be noted, however, that, under specific circumstances, a different order may also be possible. Further, it is also possible to perform one or more of the method steps once or repeatedly. The steps may be repeated at regular or irregular time periods. Further, it is possible to perform two or more of the method steps simultaneously or in a timely overlapping fashion, specifically when some or more of the method steps are performed repeatedly. The method may comprise further steps which are not listed.

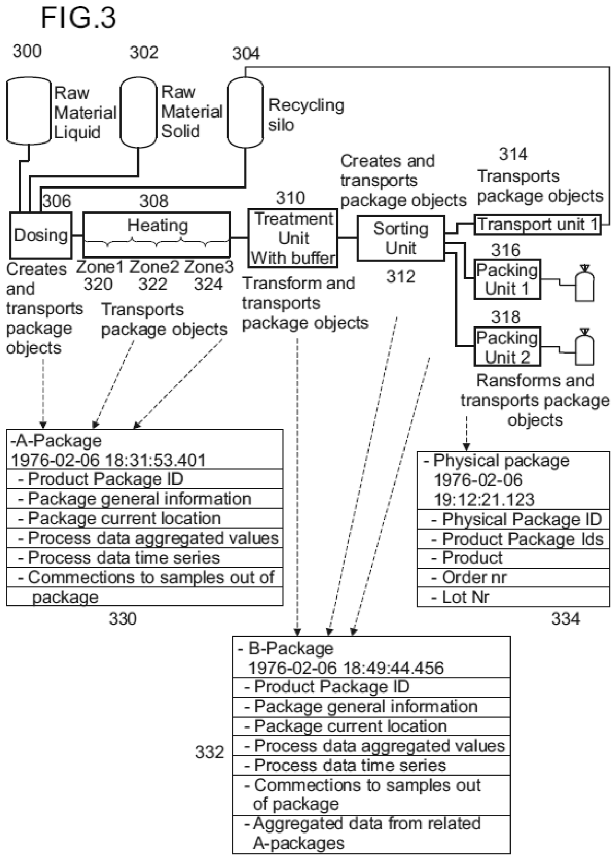

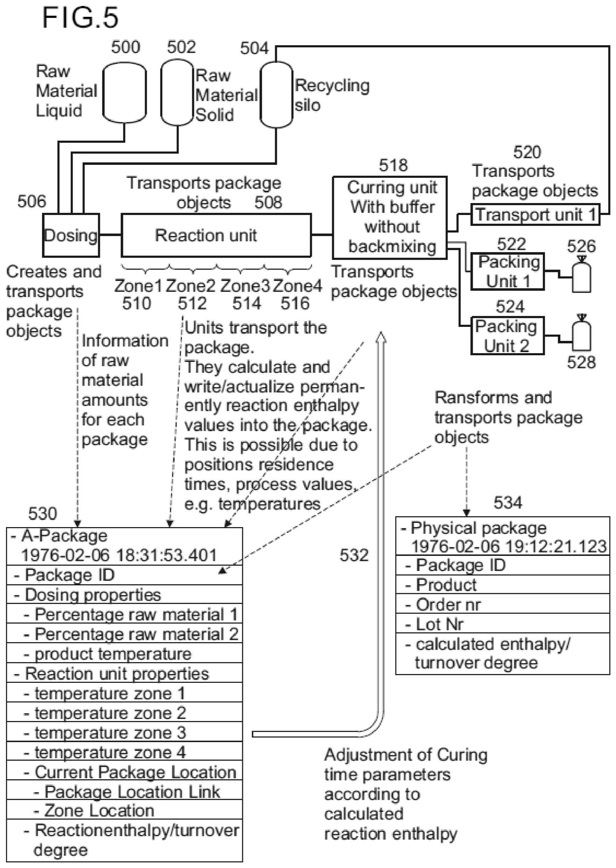

The block diagram shown in FIG. 3 represents parts of a product production system of an industrial plant, which, in the present embodiment, comprises ten product processing devices or units 300 - 318, or technical equipment respectively, being arranged along the shown entire product processing line. In the present embodiment one of these processing units (processing unit 308) includes three corresponding equipment zones 320, 322, 324 (see also more detailed embodiments in FIGs. 3 and 5).

In the present example a chemical product, as input material, is produced based on a raw material which is provided to the processing line via a liquid raw material reservoir 300, a solid raw material reservoir 302, and a recycling silo 304 which recycles any chemical products or intermediate products that e.g. comprise insufficient material/product properties or an insufficient material/product quality, The respective raw material being input to the processing line 306 - 318 is processed via the respective processing equipment, namely a dosing unit 306, a subsequent heating unit 308, a subsequent treatment unit including a material buffer 310, and a subsequent sorting unit 312. Downstream of this processing equipment 306 - 312, there is arranged a transport unit 314 which transports material that needs to be recycled, e.g. due to insufficient quality of the produced material, from the sorting unit to the recycling silo 304. Finally, the material being sorted by the sorting unit 312 is transferred to a first and a second packing unit 316, 318 which pack the according materials into material containers for shipping purposes, e.g. material bags in case of bulk material or bottles in case of liquid material.

The production system 300 - 318, in the present embodiment, provides a data interface of a computing unit (both not being depicted in this block diagram), via which data objects comprising data about the respective input materials and their changes due to the processing are provided. The entire production process is, at least partially, controlled via the computing unit.

The input material(s) being processed by the processing equipment 306 - 312 is(are) divided into physical or real-world so-called "package objects" (in the following also called "physical packages" or "product packages"), wherein these package objects are handled or processed by each of the processing units 306 - 312. The package size of such package objects can be fixed, e.g. by material weight (e.g. 10 kg, 50 kg, etc.) or by material amount (e.g. 1 decimeter, 1/10 cubic meter, etc.), or even can be determined by a weight or amount, for which considerably constant process parameters or equipment operation parameters can be provided by the processing equipment.

The dosing unit 306 first creates such package objects from the input liquid and/or solid raw material and/or the recycled material provided by the recycling silo 304. Having created the package objects, the dosing unit transports these objects to the homogenization unit 308. The homogenization unit 308 homogenizes the materials of the package objects, i.e. homogenizes e.g. a processed liquid material and a solid material, or two liquid or solid materials. After the heating process, the heating unit 308 transports the accordingly heated package objects to the treatment unit 310 which transforms the material of the input package objects into a different physical and/or chemical state, e.g. by heating, drying or humidifying or by a certain chemical reaction. The accordingly transformed package objects are then transported to one or more of the three downstream packing units 316, 318 or the mentioned transport unit 314.

The subsequent processing of the real-world package objects is managed by means of corresponding data objects 330, 332, 334 (or pre-described "object identifiers", respectively) which are assigned to each package object via the computing unit operatively coupled to the equipment 306 - 312, or being a part of the equipment, and is stored at a memory storage element of the computing unit. According to the present embodiment, the three data object 330 - 334 are generated in response to a trigger signal which is provided via the equipment 306 - 312, namely in response to the output of a corresponding sensor being arranged at each of the equipment units 306 - 312, or according switches respectively, wherein such sensors are operatively coupled to the equipment units 306 - 312. As mentioned beforehand, the industrial plant may include different types of sensors, e.g. sensors for measuring one or more process parameters and/or for measuring equipment operating conditions or parameters related to the equipment or the process units. In the present embodiment, sensors for measuring the flowrate and the level of the bulk and/or liquid materials processed inside the equipment units 306 - 312 are arranged at these units.

The three exemplary data objects 330, 332, 334 depicted in FIG. 3, in the present embodiment, each relate to different the three equipment zones 320, 322, 324 of the entire product production process based on the processing units 306 - 312 and 314 - 318.

The first two data objects 330, 332 comprise product package objects which contain process data. The process data comprises processing/treatment information which the related physical package has experienced during its residence/treatment within the several processing units. The process data can be aggregated data such as a calculated average temperature during the residence time of the underlying physical package within the related processing units and/or it can be time series data of the underlying production processes.

The first data object 330 is a first kind of package (in FIG. 3 called "A-Package") which, in the present embodiment, is assigned to a physical package that has been transported through the two processing units, the Dosing unit 306 and the Heating unit 308. The first data object 330 includes, at the present point in processing time, the related data of both units during each residence. The first data object includes a corresponding "Product Package ID".

The Heating unit 308 contains several equipment zones, in the present embodiment, three equipment zones 320, 322, 324 ("Zone 1", "Zone 2", "Zone 3"). These different equipment zones are utilized as sorting group for sorting or selecting the related process data. Such a sorting may help to obtain only those data for a package object out of a related equipment zone, which relate to the processing of the underlying physical package within the corresponding point in time during which the related physical package is inside this equipment zone. However, in the present embodiment, the material composition of the physical package is not changed by both processing units 306, 308.

Once the A-package 330 has arrived at the next Treatment unit 310 (in the present embodiment a "treatment unit with buffer"), the material composition of each physical package changes, because this processing unit 310 not only transports physical packages in a plug flow mode. Moreover, corresponding physical packages comprise a buffer volume which is bigger than the original package size, so that such physical packages have a defined back-mixing degree. As a consequence, each physical package which leaves this Treatment unit 310, is another kind of physical package, which is called "B-package" in FIG. 3.

The corresponding second data object 332 ("B-package") also includes a corresponding "Product Package ID". The data object 332 further includes the data of a defined number of previous data objects, in the present example the data object 330 designated as "A-Package", in a defined percentage, the so-called "Aggregated data from related A-packages". An according aggregation scheme or algorithm depends e.g. on the underlying processing unit, on the size of the underlying physical package, on the mixing capabilities of the material of the underlying physical package and on the residence time of the underlying physical package within the underlying processing unit, or a corresponding equipment zone of the processing unit.

Once processed physical (product) packages are packed by one of the two Packing units 316, 318 into discrete physical packages, e.g. by packing processed physical packages into a container, a drum or into an octabin vessel or the like, in the present embodiment, corresponding packed physical packages are handled or tracked via another data object 334 called "Physical package". This data object 334 includes related previous physical packages (like the "A-Package" and the "B-Package" in the present scenario) which have been packed into it. The designation of corresponding "Product Package IDs" is sufficient e.g. for tracking purposes, instead of using complete data objects, because such Product Package IDs can be easily linked together during a later data processing, e.g. data processing performed by means of an external "cloud computing" platform.

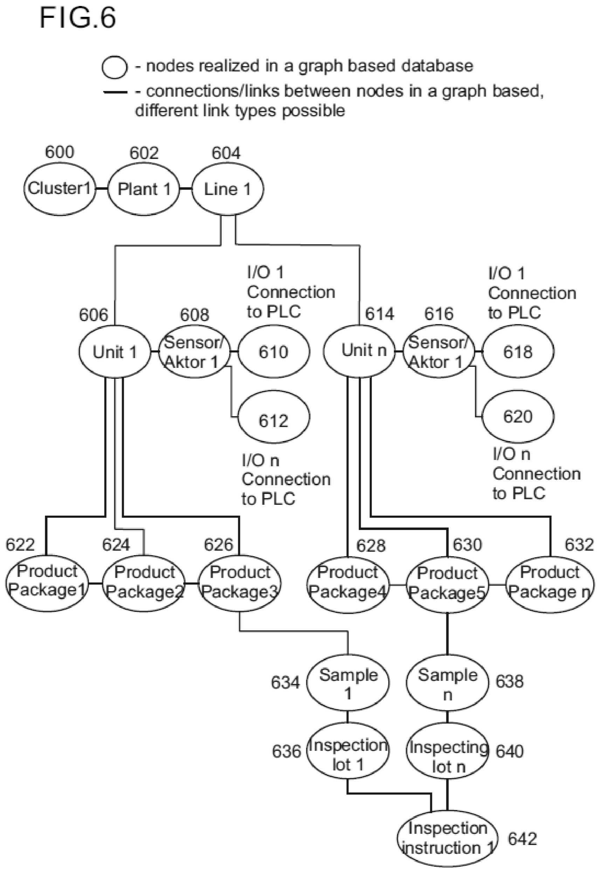

The first data object (or "object identifier") 330 particularly includes the following information:
- A "Product Package ID" for an underlying package;
- general information about the underlying package, like information, or a specification, about the underlying processed material(s) of the package;
- the current location of the underlying package within the entire processing line 306 - 318;
- process data, i.e. as aggregated values of temperature and/or weight of the processed material(s) of the underlying package;
- time series data of the underlying production process; and
- connections to samples out of the underlying package, wherein a product package passes a sample station and, at a defined moment, an operator takes a sample out of this product package and provides it to a lab. For this sample, a sample object (see FIG. 6, reference signs 634 and 638) will be generated and will be linked to the related product package (see FIG. 6, reference signs 626 and 630). This sample object, in particular, contains corresponding product quality control (QC) data from the lab and/or performance data from according testing machines.

The second object identifier 332 additionally includes
- aggregated data from related A-packages which is generated in the treatment unit with buffer 310.

The third object identifier 334 is generated by the two packing units 316, 318 with the designation and time stamp "Physical package 1976-02-06 19:12:21.123" and includes the following information:
- Again, an according package or object identifier ("Package ID");
- the name of the product being packed into the two material containers for shipping purposes depicted in FIG. 3;
- the order number for ordering the product being packed accordingly; and
- the Lot number of the product being packed accordingly.

The package general information of the first and second object identifier 330, 332 includes material data of the input raw material, which in the present embodiment, is indicative of a chemical and/or physical property of the input material, or processed material(s) respectively, like the material(s) temperature and/or weight, and in the present embodiment comprises also above mentioned lab sample or test data related to the input material, such as historical test results.

According to the product production process also illustrated by FIG. 3, via the mentioned interface, process data from the overall equipment are gathered which are indicative of process parameters like the mentioned temperature and/or weight of the processed material(s), and in the present embodiment also of equipment operating conditions that the input material is processed under, like the temperature of a mentioned heater and/or the applied dosing parameters. The gathered process data, in the present embodiment only part of the process data like the aggregated data from related A-packages, in the present embodiment, are appended to the second object identifier 332.

As described beforehand, the three object identifiers 330 - 334, in the present embodiment, are used for correlating or mapping the mentioned input material data and/or specific process parameters and/or equipment operating conditions to at least one performance parameter of the chemical product, said performance parameter being, or it being indicative of, any one or more properties of the underlying material(s), e.g. an according chemical product, respectively.

According to the present embodiment shown in FIG. 3, the gathered process data (as aggregated values) included in the two object identifiers 330, 332 comprise numerical values indicative of the process parameters, and additionally of the equipment operating conditions measured during the production process. In addition, the object identifiers 330, 332 include process data being provided as time-series data of one or more of the process parameters and/or the equipment operating conditions. The equipment operating conditions can be any characteristics or values that represent the state of the equipment, in the present embodiment, production machine setpoints, controller outputs, and any equipment related warning, e.g. based on vibration measurements. Additionally, the transport element speed, temperature and fouling value such as filter differential pressure, a maintenance date can be included.

In the embodiment of the product production system shown in FIG. 3, the entire product processing equipment 306 - 318 comprises the mentioned plurality of three equipment zones 320 - 324 such that during the production process, the input raw material(s) 300 - 304 traverses along the entire processing line 306 - 318 and, in the present embodiment, progresses from the first equipment zone 320 to the second equipment zone 322 and from the second equipment zone 322 to the third equipment zone 324. In such a production scenario, the first object identifier 330 is provided at the first equipment zone 320, wherein the second object identifier 332 is provided at the entry of the input material at the second equipment zone 322, after having been processed through the first equipment zone 320. The second object identifier 332 is appended with or includes at least part of the data or information provided by the first object identifier 330 and additionally includes the last data/information "Aggregated data from related A-packages".

It is noteworthy that any or each of the object identifiers 330 - 334 may include a unique identifier, preferably a globally unique identifier ("GUID"), in order to allow for a reliable and safe assignment of an object identifier to a corresponding package during the whole production process.

In the present product processing scenario, the mentioned process data appended to the first object identifier 330 are at least part of the process data gathered from the first equipment zone 320. Accordingly, the second object identifier 332 is appended with at least part of the process data gathered from the second equipment zone 322, wherein the process data gathered from the second equipment zone 322 are indicative of the process parameters and/or equipment operating conditions that the input raw material(s) 300 - 304 is processed under in the second equipment zone 322.

In the following TABLE 1, another exemplary object identifier is shown, again in a tabular format. This object identifier includes much mor information/data than the previously described three object identifiers 330 - 334.

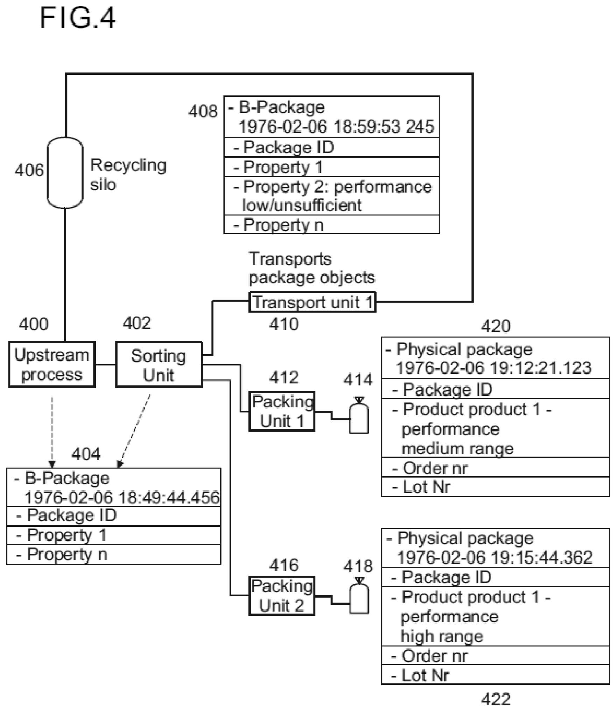

This exemplary object identifier concerns a so-called "B-Package" with an underlying date and time stamp "1976-02-06 18:31:53.401", like that shown in FIG. 4 being described in the following but including more data than that included in FIG. 4.

The unique identifier ("Unique ID"), in the present example, comprises a unique URL ("uniqueObjectURL"). The main details of the underlying package ("Package Details"), in the present example, are the date and timestamp of the creation of the package ("Creation Timestamp") having the two values "02.02.1976 18:31:53.401" and the type of the package ("Package Type"), in the present example having a package type "B". The current location of the package along the underlying production line ("Package Location") is defined by a "Package Location Link", in the present example a transport link to a "Conveyor Belt 1" of the production line.

At the Conveyor Belt 1, there is provided measuring equipment (see "Measuring Points" which include exemplary processing data or values) for measuring the average temperature ("Average Value") currently revealing a material temperature of 85 °C and an according description ("Description") of the underlying temperature zone, in the present example "Temperature Zone 1". In addition, the measuring equipment can also include sensors for detecting the entry date/time of the package at the Conveyor Belt 1 ("Entry Time"), in the present example being "02.02.1976 18:31:54.431" and for detecting the leaving date/time of the package from the Conveyor Belt 1 ("Leaving Time"), in the present example being "02.02.1976 18:31:57.234". Finally, the measuring equipment includes sensor equipment for detecting time series values ("Time Series Values") of underlying time series information ("Time Series") concerning the production process.

In addition, the shown object identifier, in the present example, further includes information about a downstream located "Conveyor Belt 2", a downstream located "Mixer 1" and a downstream located "Silo 1" for intermediately storing already processed material(s).

**TABLE 1: Exemplary tabular object identifier**

| | | | | |
|---|---|---|---|---|
| - B-Package 1976-02-06 18:31:53.401 | | | | |
| | - Unique ID | | | |
| | | - Unique URL | | uniqueObjectUrl |
| | - Package Details | | | |
| | | - Creation Timestamp | | 02.02.1976 18:31:53.401 |
| | | - Package Type | | B |
| | - Package Location | | | |
| | | - Package Location Link | | Conveyor Belt 1 |
| | - Conveyor Belt 1 | | | |
| | | - Measuring Point | | |
| | | | - Average Value | 85°C |
| | | | - Description | Temperature Zone 1 |
| | | | - Entry Time | 02.02.1976 18:31:54.431 |
| | | | - Leaving Time | 02.02.1976 18:31:57.234 |
| | | | - Time Series | Time Series Values |
| | - Conveyor Belt 2 | | | |
| | - Mixer 1 | | | |
| | - Silo 1 | | | |

FIG. 4 shows a second embodiment of 'process parts of an underlying product production system of an industrial plant, which, in the present second embodiment, comprises six product processing devices 400, 402, 406, 410, 412, 416, or technical equipment, respectively.

An "Upstream process" 400 for processing package objects is connected to a "Sorting Unit" 402 for sorting thew processed package objects. The upstream process 400 and the sorting unit 402 are managed by means of a first data object 404. This data object 404 concerns an already described "B-Package" with an underlying date and time stamp "1976-02-06 18:51:43.431" depicting the date and time of its creation. The data object 404 includes a "Package ID" of a currently processed package object (so-called "object identifier"). The data object 404 further includes n pre-described chemical and/or physical properties about the currently processed package object, in the present example a "Property 1" and a "Property n".

The input materials, i.e. the corresponding package objects being fed in to the upstream process 400, in the present example, are provided by a "Recycling Silo" 406. The recycling silo 406, on the other hand, gets the underlying recycled materials from a "Transport unit 1" 410 which transports package objects, that have to be recycled and are sorted out by the sorting unit 402 accordingly, to the recycling silo 406. The underlying transport process step 410 is managed by means of a second data object 408 which concerns the above described "B-Package" and includes the mentioned underlying date and time stamp "1976-02-06 18:51:43.431", the "Package ID" of the currently processed package object and the two chemical and/or physical properties "Property 1" and a "Property n". However, due to the mentioned requirement to recycle the underlying sorted-out package object, the second data object 408 further includes another chemical and/or physical property of the underlying package object, in the present example a "Property 2", which particularly includes a respective performance indicator for that package object, in the present example a "low or insufficient material or product performance".

Package objects being processed by the upstream process 400 and not being sorted out by the sorting unit 402 are provided by the sorting unit 402 to either a first "Packing Unit 1" 412 or a second "Packing Unit 2" 416, depending on performance values for the corresponding package objects. The packing units 412, 416 are used for packing the corresponding package objects to respective containers 414, 418. The packing process being executed by the two packing units 412, 416 is managed by means of a third data object 420 and a fourth data object 422.

The two data objects 420, 422 both concern "Physical Packages" and include the same date "1976-02-06" as the above described "B-Package", but a later time stamp "19:12:21.123" than the above described "B-Package". They also include the "Package ID" of the underlying package objects. However, the data objects 420, 422 further include performance indicators for the underlying final products, in the present example a "performance medium range" regarding the products stored in the first container (or filling sack) 414 and a "performance high range" in case of the products stored in the second container (or filling sack) 418. In addition, the two data objects 420, 422 include the "Order no." and "Lot no." of the corresponding final products.

FIG. 5 shows a third embodiment of parts of an underlying chemical product production process or system implemented at an industrial plant, which, in the present second embodiment, comprises nine product processing devices 500 - 516, or technical equipment respectively.

The present product processing approach is based on two raw materials, namely a "Raw Material Liquid" 500 and a "Raw Material Solid" 502, in order to produce a polymeric material in a known manner. Like in the previously described production scenarios according to FIG.s 3 and 4, the technical equipment includes a "Recycling silo" 504 for using recycled materials, as described beforehand.

The technical equipment further includes a "Dosing unit 506" for creating package objects based on the mentioned input raw materials which are processed by a "Reaction unit" 508 which transports package objects along the shown four polymeric reaction zones ("Zones 1 - 4") 510, 512, 514, 516 in order to process them and by a "Curing unit" 518 for curing the polymeric material (i.e. the corresponding package objects) being produced in the reaction unit 508. The curing unit 518, in the present embodiment, comprises only a material buffer, but not a back-mixing equipment. The curing unit 518 also transports accordingly processed package objects.

A "Transport unit 1" 520 transports package objects being sorted out for their recycling by means of the recycling silo 504. The finally processed, i.e. not sorted out, units are transported again to a first "Packing Unit 1" 522 and to a second "Packing Unit 2" 524. The two packing units 522, 524 transform and transport the corresponding package objects to respective containers or filling sacks 526, 528.

The production process depicted in FIG. 5 is managed by means of a first data object 530 and a second data object 534.

The first data object 530 concerns an "A-Package" with creation date "1976-02-06" and creation time "18:31:53.401". The data object 530, in the present production scenario, includes again a pre-described "Package ID", process information about the dosing process ("Dosing properties") being performed by the dosing unit 506, and further process information ("Reaction unit properties") about the production of the polymeric material by means of the reaction unit 508. The dosing properties include information about the raw material amounts for each package object, namely the "Percentage raw material 1 (liquid)", the "Percentage raw material 2 (solid)" and the product temperature. The Reaction unit properties include the temperatures of the four polymeric reaction zones 510 - 516 ("temperature zone 1", "temperature zone 2", "temperature zone 3" and "temperature zone 4").

Thereupon, the first data object 530 includes the current location of an underlying package object ("Current Package Location") along the processing line 506 - 524. The current location of that package object, in the present embodiment, is managed by means of a "Package Location Link" and a corresponding "Zone location". Finally included is chemical and/or physical information about the underlying polymeric reaction, namely the corresponding "Reaction enthalpy / turnover degree". Hereby, the processing units 506 - 524 which transport a given package object, calculate and write/actualize permanently reaction enthalpy values into the first data object 530. This is possible due to existing information about package positions and corresponding residence times and about according process values, e.g. package temperatures. Based on the current values of the reaction enthalpy and/or turnover degree included in the first data object 530, via a communication line 532 between the first data object 530 and the curing unit 518, the curing time parameters are adjusted, based on a calculated value of the reaction enthalpy.

The second data object 534 concerns a "Physical package" being processed by one of the packing units 522, 524 and includes the corresponding creation date/time information "1976-02-06 19:12:21.123". Included are a "Package ID", a "Product" description/specification, an "Order no.", a "Lot no." and the mentioned value of the calculated enthalpy and/or turnover degree.

FIG. 6 shows a first embodiment of a graph-based database arrangement representing the hierarchical or topological structure of an underlying industrial plant 602, which is part of a cluster 600 of industrial plants, and which includes a plurality of equipment devices and corresponding equipment zones being part of an according product processing line 604. This topological structure allows to visualize the functional relationship between the underlying different parts of the industrial plant 602 (or underlying plant cluster 600) in order to enable an improved processing or planning of underlying product packages. The shown circular nodes of the graph-based database are linked via connection lines, for which different link types are possible.

The equipment devices, in this embodiment, include material processing units 606, 614 which are connected via a signal and/or data connection with sensors/actors 608, 616 being part of the processing units 606, 614 and which are connected to several input/output (I/O) devices 610, 612 and 618, 620.

In the present embodiment, the first processing unit 606 is further connected with exemplary three product packages (Product Packages 1 - 3) 622, 624, 626, wherein the second processing unit 614 is further connected with further three product packages (Product Packages 4 - n) 628, 630, 632. Only exemplary, "Product Package 3" 626 is connected to a product sample (Sample 1) 634, wherein "Product Package 5" 630 is connected to another product sample (Sample n) 638. "Sample 1" 634 is further connected with an "Inspection lot 1" 636, wherein "Sample n" is further connected with an "Inspection lot n" 640. Finally, both inspection lots 636, 640 are connected with an "Inspecting Instruction 1" unit 642 which serves as a specification on how to create a mentioned inspection lot and on how to realize the analysis/quality control of a respective underlying sample 634, 638.

The topological structure shown in FIG. 6, advantageously provides data structures which allow for an intuitive and easy understanding of the functionality and processing of a shown chemical plant and thus an easy manageability of such a complex production process in the chemical plant or cluster of chemical plants by a user, in particular a machine/plant operator, since the shown objects (nodes) are modelled very similar like the corresponding real-world objects.

More particularly, this topological structure provides a high degree of contextual information, based on which the user/operator can easily gather the technical and/or material property of each object. This additionally allows for rather complex queries by the user, e.g. about relevant production-related connections or relations between objects, particularly across several nodes or even topology/hierarchy levels. Thereupon, the objects (nodes) shown in FIG. 6 can be extended easily during runtime by further properties and/or values.

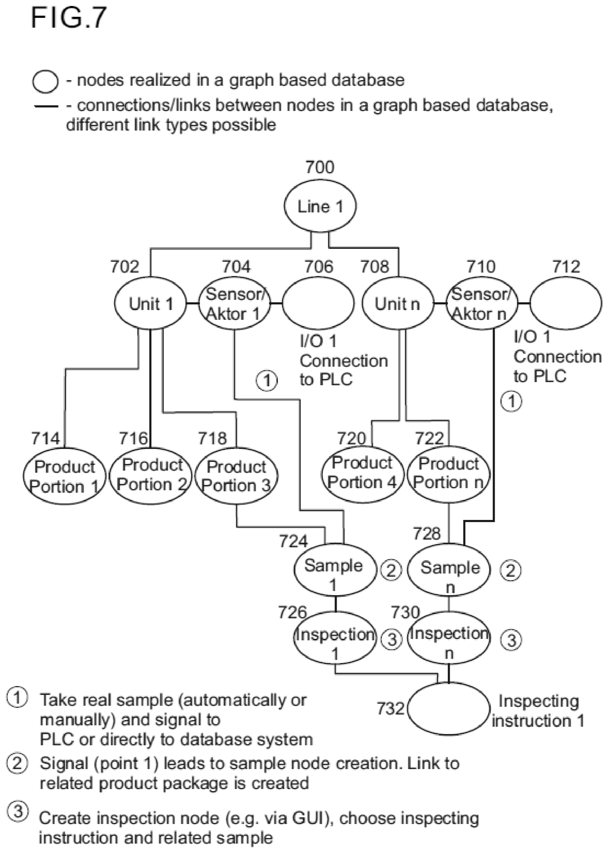

FIG. 7 shows a second embodiment of a graph-based database arrangement as shown in FIG. 6, but only for a production line 700 ("Line 1").

The equipment devices, in the present embodiment, include material processing units 702 "Unit 1" and "Unit n" 708 which are connected via a signal and/or data connection with sensors/actors "Sensor/Actor 1" 704 and "Sensor/Actor n" 710 which are connected to corresponding input/output (I/O) devices "I/O 1" 706 and "I/O n" 712. These I/O devices comprise a connection to a (not shown) PLC for controlling the operation of the production line 700.

In the present embodiment, the first processing unit ("Unit 1") 702 is further connected with exemplary three product packages ("Product Portions" 1 - 3) 714, 716, 718, wherein the second processing unit ("Unit n") 708 is further connected with further two product packages ("Product Portions" 4 and n) 720, 722. Only exemplarily, product package 3" 718 is connected to a product sample ("Sample 1") 724, wherein product package n 722 is connected to another product sample ("Sample n") 728.

In contrast to the embodiment shown in FIG. 6, the first "Sensor/Actor 1" 704 is also connected to the first product sample ("Sample 1") 724, wherein the second "Sensor/Actor n" 710 is also connected to the second product sample (Sample n") 728. These two additional connections have the advantage that it is possible to independently take samples at different sample stations at independent times, or even at the same time. For instance, the sensor/actor 704 can be a push button being arranged at a sample station, which is pressed by a user or operator at the moment when a sample is taken.

Alternatively, such a sample can be a signal that can be generated automatically by a sampling machine. Such an automatically generated signal can e.g. reach the sensor/actor object 704 via the shown I/O object 706, wherein the I/O object 706 receives the mentioned push button information from the (not shown) PLC/DCS. At the moment of taking the sample, the sample object 724 (e.g.) will be created and linked to the product portion located at the sampling station location in that moment.

Based on the accordingly generated samples 724, 728, one or more inspection lots 726, 730 can be generated, even for only one (and the same) sample. However, one or more samples can be generated within one processing line independently, or even at same time.

Finally, like in the embodiment shown in FIG. 6, "Sample 1" 724 is further connected with a first "Inspection unit 1" 726, wherein "Sample n" is further connected with a second "Inspection unit n" 730. Both inspection units 726, 730 are finally connected with an "Inspecting Instruction 1" unit 732 which again serves as a specification, like in the case of the "Inspecting Instruction 1" unit 642 depicted in FIG. 6, namely on how to create a mentioned inspection lot and on how to realize the analysis/quality control of an underlying sample 724, 728. The "Inspecting instruction 1" unit 732 can be created independently, and may be created only once, while using the inspecting instruction 732 for more than only one inspection lot, as illustrated in FIG. 7 by the "Inspection lot 1" 726 and further "Inspection lot n" 730.

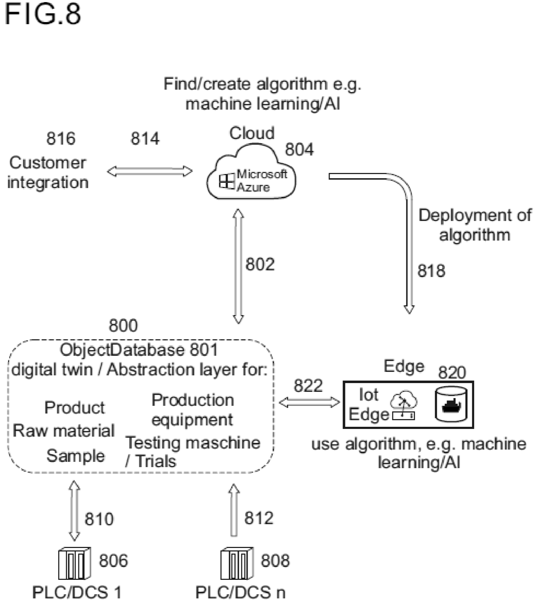

FIG. 8 depicts an abstraction layer 800 which includes an object database 801 and which serves as an abstraction layer for a pre-described production equipment and corresponding raw materials, and for the pre-described product data, maybe including pre-described physical package or product package related data, namely as according digital twins.

The abstraction layer 800, in the present embodiment, provides a bi-directional communication line 802 with an external Cloud computing platform 804. Further, the abstraction layer 800 communicates also with a number of n production PLC/DCS and/or machine PLCs 806, 808, either bidirectionally 810, as in the case of "PLC/DCS 1" 806, or unidirectionally 812, as in the case of "PLC/DCS n" 808. The Cloud computing platform 804, in the present embodiment, comprises a bidirectional communication line 814 to a Customer integration interface or platform 816, via which customers of the present production plant owner can communicate and/or deliver control signals to pre-described equipment units of the plant.

In the object database 801 further included are other objects concerned herewith, e.g. above described samples, inspection lots, sample instructions, sensors/actors, devices, device-related documentation, users (e.g. machine or plant operators), according user groups and user rights, recipes, orders, setpoint-parameter sets, or inbox objects from cloud/edge devices.

At the Cloud computing platform 804, an Artificial Intelligence (AI) or machine learning (ML) system is implemented, by which to find or create an optimum algorithm which is deployed via a dedicated deployment pipeline 818 to an Internet-of-Things (IoT) Edge device or component 820, in order to use an accordingly created or found algorithm for controlling the Edge device 820. The Edge device 820, in the present embodiment, communicates 822 bidirectionally with the abstraction layer 800.

By means of the abstraction layer 800 and the included object database 801, pre-described physical or product packages are created, as described within this document. The abstraction layer 800 can also connect to certain processing and/or Al (or ML) components within the Cloud computing platform 804. For this connection, the known data streaming protocol "Kafka" can be used. Hereby, at or around the time of creation of an underlying product package, first an empty data packet can be sent out as a message, in particular independent of the underlying timeseries data. After that, another message can be sent out when the final product package has been processed. These messages contain the object identifier of the underlying package as data packet ID, so that the relating packets can be linked again with each other on side of the Cloud platform later. This has the advantage that large-size data packets can be avoided for the transmission to the Cloud, thus minimizing the required transmission bandwidth or capacity.

Within the Cloud computing platform 804, the streamed and received product data is used by mentioned Al methods or ML methods in order to find or create algorithms for getting additional data related to an underlying product, such as predicted product quality control (QC) values. For this procedure being performed within the Cloud computing platform 804, additional data like QC data or measured performance parameters of a related product (or physical) package is needed. This can either be received via the same way from the object database 801 in the form of sample objects and inspection lot objects (see also FIG 6) which contain such information about related product packages.

Such information can also be received from any other systems than the object database. In this case the other system sends the QC and/or performance data together with a sample/inspection lot ID out of the object database. Within Cloud computing platform 804, this data will be combined and used for finding e.g. ML-based algorithms/models. Hereby the computing power within the Cloud platform 804 can be used effectively.

In the present embodiment, the accordingly found algorithms or models are deployed to the Edge device 820 via the deployment pipeline 818. The Edge device 820 can be a component which is located close to the object database 801 of the abstraction layer 800, and thus also close to the PLC/DCS 1 to PLC/DCS n 806, 808 accordingly, namely in terms of a network security level and and location which allows for a low network latency and direct and se-cure communication.

Since, for usage of the ML-model, not such a computing power is needed, the Edge device 820 uses the ML model to generate the mentioned advanced information and provides it to the object database 801. Therefore, the Edge device 820 needs the same information or a subset of the information which is used at the Cloud computing platform 804 to generate the ML-based algorithm or model, the object database 801 can provide this data to the Edge device 820, e.g. via an open network protocol for machine-to-machine communication, like the known "Message Queuing Telemetry Transport" (MQTT) protocol.

This setup enables the realization of an Al/ML-based advanced process control and autonomous manufacturing and according autonomously operating machines.

As illustrated in the embodiment shown in FIG. 8, based on data from a pre-described data object 330 - 334 (FIG. 3), on side of the Cloud computing platform 804 the Al/ML system or according AI/ML model is trained using such data as training data. The training data, in the present embodiment, thus may comprise historical and current laboratory test data, in particular data from the past, being indicative of the performance parameters of the chemical product.

The Al/ML model can be used for predicting one or more of pre-described performance parameters, said prediction being preferably done via the computing unit. Additionally, or alternatively, the AI/ML model can be used for least partially controlling the production process, preferably via adjusting the equipment operating conditions, and more preferably said controlling being done via the mentioned computing unit. Additionally, or alternatively, the Al/ML model can also be used, e.g., by the computing unit, for determining which of the process parameters and/or equipment operating conditions have a dominant effect on the chemical product, such that those dominant of the process parameters and/or equipment operating conditions are appended to the data object, or the mentioned object identifier, respectively.

The word "comprising" does not exclude other elements or steps, and the indefinite article "a" or "an" does not exclude a plurality. A single processing means, processor or controller or other similar unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

Further, it shall be noted that in the present disclosure, the terms "at least one", "one or more" or similar expressions indicating that a feature or element may be present once or more than once typically may have been used only once when introducing the respective feature or element. Thus, in some cases unless specifically stated otherwise, when referring to the respective feature or element, the expressions "at least one" or "one or more" may not have been repeated, non-withstanding the fact that the respective feature or element may be present once or more than once.

Further, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The present teachings may, as the skilled person will recognize, be performed by using alternative features. Similarly, features introduced by "according to an aspect" or similar expressions are intended to be optional features, without any restriction regarding alternatives of the present teachings, without any restrictions regarding the scope of the present teachings and without any restriction regarding the possibility of combining the features introduced in such way with other optional or non-optional features of the present teachings.

Any headings utilized within the description are for convenience only, accordingly such headlines do not have any limiting effect on the subject matter.

Various examples have been disclosed above for a method for improving a production process; a system for carrying out the method herein disclosed; a system for improving a production process; a software program; and a computing unit comprising the computer program code for carrying out the method herein disclosed. Those skilled in the art will understand however that changes and modifications may be made to those examples without departing from the spirit and scope of the accompanying claims and their equivalents. It will further be appreciated that aspects from the method and product embodiments discussed herein may be freely combined. More specifically, a method for improving a production process for manufacturing a chemical product using at least one input material at an industrial plant, the industrial plant comprising a plurality of physically separated equipment zones, the method comprising: providing, via an interface, an upstream object identifier comprising input material data; receiving, at a computing unit, real-time process data from one or more of the equipment zones; determining, via the computing unit, a subset of the real-time process data based on the upstream object identifier and a zone presence signal; computing, via the computing unit, at least one zone-specific performance parameter of the chemical product related to the upstream object identifier based on the subset of the real-time process data and historical data; determining, in response to at least one of the performance parameters, a target equipment zone where the input material and/or chemical product is to be sent. The present teachings also relate to a system, and a software program. Those skilled in the art will understand however that changes and modifications may be made to those examples without departing from the spirit and scope of the accompanying claims and their equivalents. It will further be appreciated that aspects from the method and product embodiments discussed herein may be freely combined.

## Claims

1. A method for improving a production process for manufacturing a chemical product at an industrial plant, the industrial plant comprising a plurality of physically separated equipment zones and one or more computing units, and the product being manufactured by processing, via the plurality equipment zones, at least one input material using the production process, which method comprises:
- providing, via an interface, an upstream object identifier comprising input material data;
wherein the input material data is indicative of one or more properties of the input material,
- receiving, at any of the computing units, real-time process data from one or more of the equipment zones; wherein the real-time process data comprises real-time process parameters and/or equipment operating conditions,
- determining, via any of the computing units, a subset of the real-time process data based on the upstream object identifier and a zone presence signal; wherein the zone presence signal indicates presence of the input material at a specific equipment zone during the production process,
- computing, via any of the computing units, at least one zone-specific performance parameter of the chemical product related to the upstream object identifier based on the subset of the real-time process data and historical data, wherein the computing of the at least one zone-specific performance parameter is done using a model, which is at least partly an analytical computer model and /or at least partly one or more machine learning ("ML") models;
- determining, in response to at least one of the performance parameters, a target equipment zone where the input material and/or chemical product is to be sent.

2. The method of claim 1, wherein the input material for the processing via the equipment is divided into at least two packages wherein the size of a package is fixed or is determined based on an input material weight or amount, for which considerably constant process parameters or equipment operation parameters can be provided by the equipment.

3. The method of any one of the preceding claims, wherein the processing of the at least two packages is managed by means of corresponding data objects, each of which at least including an historical object identifier.

4. The method of any one of the preceding claims, wherein the method also comprises:
- appending, to the upstream object identifier, the at least one zone-specific performance parameter.

5. The method of any one of the preceding claims, wherein the historical data comprise data from one or more historical object identifiers related to previously processed input material.

6. The method of claim 5, wherein at least of the one historical object identifiers is appended with at least a part of that historical process data which is indicative of the process parameters and/or equipment operating conditions that the previously processed input material was processed under.

7. The method of any one of the preceding claims, wherein the machine learning model is trained using the historical data.

8. The method of any one of the preceding claims, wherein the machine learning model is trained using the historical data from the one or more historical object identifiers.

9. The method of any one of the preceding claims, wherein at least one of the zone-specific performance parameter is also related to a derivative material that is produced from the input material, but prior to the chemical product during the production process.

10. The method of any one of the preceding claims, wherein the machine learning model is a data driven model, in particular a regression model, or wherein the machine learning model is a hybrid model.

11. The method of any one of the preceding claims, wherein the industrial plant comprises an Internet-of-Things (IoT) Edge device or component and wherein the underlying ML system is implemented to find or create an algorithm, which is deployed to the loT Edge device or component, in order to use the accordingly created or found algorithm for controlling the loT Edge device.

12. The method of any one of the preceding claims, further comprising: providing an abstraction layer which includes an object database and which serves as an abstraction layer for the production equipment, for the corresponding input materials and for package-related data.

13. The method of the preceding claim, wherein the abstraction layer connects to certain processing and/or ML components within a Cloud computing platform, wherein for this connection, a data streaming protocol is used, and wherein streamed and received product data is used by the ML system to find or create algorithms for getting additional data related to an underlying chemical product.

14. The method of the preceding claim, wherein the additional data concern predictable product quality control (QC) data of the underlying chemical product.

15. The method of any one of the preceding claims, wherein the training data for training the ML model also comprise historical and/or current laboratory test data, or data from the past and/or recent samples, said historical and/or current laboratory test data being indicative of the performance parameters of the chemical product.

16. The method of any one of the preceding claims, wherein the model or the ML model provides at least one confidence value indicative of the confidence level for the at least one zone-specific performance parameter.

17. The method of the preceding claim, wherein the confidence is appended to the upstream object identifier, in particular as metadata.

18. The method of one of the two preceding claims, wherein, if the confidence level of the prediction or computation of at least one zone-specific performance parameter fall below an accuracy threshold value, a warning is triggered at the control system for production.

19. The method of any one of the three preceding claims, wherein, in response to the confidence level of the prediction or computation of at least one zone-specific performance parameter falling below the accuracy threshold value, a sampling object identifier is automatically provided, e.g, via the interface.

20. A computer program, or a non-transitory computer readable medium storing the program, comprising instructions which, when executed by suitable one or more computing units, cause the computing units to carry out the method steps of any of the above method claims.

21. A system for improving a production process for manufacturing a chemical product at an industrial plant, the industrial plant comprising one or more computing units and a plurality of physically separated equipment zones, and the product being manufactured by processing, via the plurality equipment zones, at least one input material using the production process, wherein the system is configured to:
- provide, via an interface, an upstream object identifier comprising input material data;
wherein the input material data is indicative of one or more properties of the input material,
- receive, at any of the computing units, real-time process data from one or more of the equipment zones; wherein the real-time process data comprises real-time process parameters and/or equipment operating conditions,
- determine, via any of the computing units, a subset of the real-time process data based on the upstream object identifier and a zone presence signal; wherein the zone presence signal indicates presence of the input material at a specific equipment zone during the production process,
- compute, via any of the computing units, at least one zone-specific performance parameter of the chemical product related to the upstream object identifier based on the subset of the real-time process data and historical data, wherein the computing of the at least one zone-specific performance parameter is done using a model, which is at least partly an analytical computer mode and /or at least partly one or more machine learning ("ML") models;
- determine, in response to at least one of the performance parameters, a target equipment zone where the input material and/or chemical product is to be sent.

22. A computer program, or a non-transitory computer readable medium storing the program, comprising instructions which, when executed by suitable one or more computing units, operatively coupled to a plurality of for equipment zones for manufacturing a chemical product at an industrial plant by processing least one input material using a production process, causes any of the computing units to:
- provide, via an interface, an upstream object identifier comprising input material data;
wherein the input material data is indicative of one or more properties of the input material,
- receive real-time process data from one or more of the equipment zones; wherein the real-time process data comprises real-time process parameters and/or equipment operating conditions,
- determine a subset of the real-time process data based on the upstream object identifier and a zone presence signal; wherein the zone presence signal indicates presence of the input material at a specific equipment zone during the production process,
- compute at least one zone-specific performance parameter of the chemical product related to the upstream object identifier based on the subset of the real-time process data and historical data, wherein the computing of the at least one zone-specific performance parameter is done using a model, which is at least partly an analytical computer mode and /or at least partly one or more machine learning ("ML") models;
- determine, in response to at least one of the performance parameters, a target equipment zone where the input material and/or chemical product is to be sent.
